# EUROPEAN PATENT APPLICATION

(11) **EP 4 592 536 A2**
(43) Date of publication of application: **30.07.2025**
(21) Application number: 25153498.8
(22) Date of filing: 23.01.2025
(51) Int. Cl.: F16B 2/06

(54) **THREADED ROD HANGER**

(30) Priority: 23.01.2024 US 202463624116 P; 01.04.2024 US 202463572639 P; 14.10.2024 US 202463706881 P
(71) Applicant: Illinois Tool Works Inc., Glenview IL 60025 (US)
(72) Inventor: WIATROWSKI, Darrell A., Glenview, 60025 (US); MUSUYA MBOMBO, Paul, Glenview, 60025 (US); GAETA, Alexander, Glenview, 60025 (US)
(74) Representative: HGF

(57) **Abstract**

A threaded rod hanger that is quickly and easily attachable to an overhead structure and that enables a threaded rod to be quickly and easily attached to the threaded rod hanger.

## Description

### PRIORITY CLAIM

This application claims priority to and the benefit of U.S. Provisional Patent Application No. 63/706,881, filed October 14, 2024, docket no. 025140-2447/71842-US-P1, U.S. Provisional Patent Application No. 63/572,639, filed April 1, 2024, docket no. 025140-2390/71547-US-P1, and U.S. Provisional Patent Application No. 63/624,116, filed January 23, 2024, docket no. 025140-2329/71417-US-P1, the entire contents of each of which are incorporated herein by reference.

### BACKGROUND

Various devices have been employed to hang threaded rods from structures such as beams, ceiling structures, or other overhead structures. For example, various hanger devices have been employed to hang threaded rods from structures wherein the threaded rods are employed to support fire sprinkler pipes from such overhead structures.

There is a continuing need to develop improved devices for more quickly and easily hanging threaded rods from overhead structures.

### SUMMARY

Various embodiments of the present disclosure provide a threaded rod hanger that is quickly and easily securely attachable to an overhead structure (such as but not limited to a beam) and that is configured to support a threaded rod and equipment attached to the threaded rod.

Additional features and advantages of the present disclosure are described in, and will be apparent from, the following Detailed Description and the Figures.

### BRIEF DESCRIPTION OF THE SEVERAL VIEWS OF THE DRAWINGS

Figure 1A is a perspective view of a known threaded rod hanger.
Figure 1B is a side view of the known threaded rod hanger of Figure 1A.
Figures 1C, 1D, 1E, and 1F are a series of side views of the known threaded rod hanger of Figure 1A, a threaded rod attached to the threaded rod hanger, and a beam, and showing the steps of installing this known threaded rod hanger on the beam using a socket wrench.
Figure 2 is a first perspective view of a threaded rod hanger of one example embodiment of the present disclosure, shown prior to installation on a beam.
Figure 3 is a second perspective view of the threaded rod hanger of Figure 2, shown prior to installation on a beam.
Figure 4 is a side view of the threaded rod hanger of Figure 2, shown prior to installation on a beam.
Figure 5 is a front view of the threaded rod hanger of Figure 2, shown prior to installation on a beam.
Figure 6 is a bottom view of the threaded rod hanger of Figure 2, shown prior to installation on a beam.
Figures 7A and 7B are side views of the threaded rod hanger of Figure 2 and a beam, showing the steps of installing the threaded rod hanger on the beam using a socket, and showing a threaded rod connected to the threaded rod hanger.
Figures 8A, 8B, and 8C are partial cross-sectional side views of the threaded rod hanger of Figure 2 and a beam, showing the steps of installing the threaded rod hanger on the beam using a socket, and showing a threaded rod connected to the threaded rod hanger.
Figure 9 is a side view of the threaded rod hanger of Figure 2 and a fragmentary side view of a beam, showing the threaded rod hanger securely mounted on the beam, and showing a threaded rod connected to the threaded rod hanger.
Figure 10 is a first perspective view of the threaded rod hanger of Figure 2 and a fragmentary perspective view of a beam, showing the threaded rod hanger positioned for secure mounting on the beam during installation, and showing the threaded rod connected to the threaded rod hanger.
Figure 11 is a second perspective view of the threaded rod hanger of Figure 2 and a fragmentary perspective view of a beam, showing the threaded rod hanger securely mounted on the beam after installation, and showing the threaded rod connected to the threaded rod hanger.
Figure 12 is a perspective view of a threaded rod hanger of another example embodiment of the present disclosure, shown prior to installation on a beam.
Figure 13 is another perspective view of the threaded rod hanger of Figure 12, shown prior to installation on a beam.
Figure 14 is a side view of the threaded rod hanger of Figure 12, shown prior to installation on a beam.
Figure 15 is a front view of the threaded rod hanger of Figure 12, shown prior to installation on a beam.
Figure 16 is a perspective view of a threaded rod hanger of another example embodiment of the present disclosure, shown prior to installation on a beam.
Figure 17 is another perspective view of the threaded rod hanger of Figure 16, shown prior to installation on a beam.
Figure 18 is a side view of the threaded rod hanger of Figure 16, shown prior to installation on a beam.
Figure 19 is a front view of the threaded rod hanger of Figure 16, shown prior to installation on a beam.
Figure 20 is a first perspective view of a threaded rod hanger of another example embodiment of the present disclosure, shown prior to installation on a beam.
Figure 21 is a second perspective view of the threaded rod hanger of Figure 20, shown prior to installation on a beam.
Figure 22 is a side view of the threaded rod hanger of Figure 20, shown prior to installation on a beam.
Figure 23 is a front view of the threaded rod hanger of Figure 20, shown prior to installation on a beam.
Figure 24 is a side view of the threaded rod hanger of Figure 20, shown prior to installation on a beam and shown with a threaded rod connected thereto.
Figure 25 is a first cross-sectional view of the threaded rod hanger of Figure 20, showing a threaded rod attached thereto, and shown prior to installation on a beam.
Figure 26 is a second cross-sectional view of the threaded rod hanger of Figure 20, showing a threaded rod attached thereto, and shown prior to installation on a beam.
Figure 27 is a third cross-sectional view of the threaded rod hanger of Figure 20, showing a threaded rod attached thereto, and shown prior to installation on a beam.
Figure 28 is a perspective view of a threaded rod hanger of another example embodiment of the present disclosure, shown prior to installation on a beam.
Figure 29 is a partially exploded perspective view of the threaded rod hanger of Figure 28, shown prior to installation on a beam.
Figure 30 is a side view of the threaded rod hanger of Figure 28, shown prior to installation on a beam.
Figure 31 is a front view of the threaded rod hanger of Figure 28, shown prior to installation on a beam.
Figure 32 is a partial cross-sectional view of the threaded rod hanger of Figure 28, shown prior to installation on a beam.
Figure 33 is a rear view of the threaded rod hanger of Figure 28, shown prior to installation on a beam.
Figure 34 is a perspective view of a threaded rod hanger of another example embodiment of the present disclosure, shown prior to installation on a beam.
Figure 35 is a perspective view of a threaded rod hanger of another example embodiment of the present disclosure, shown prior to installation on a beam.
Figure 36 is a partially exploded perspective view of the threaded rod hanger of Figure 35, shown prior to installation on a beam.
Figure 37 is a side view of the threaded rod hanger of Figure 35, shown prior to installation on a beam.
Figure 38 is a side perspective of the threaded rod hanger of Figure 35, shown prior to installation on a beam.
Figure 39 is a front view of the threaded rod hanger of Figure 35, shown prior to installation on a beam.
Figure 40 is a partial cross-sectional view of the threaded rod hanger of Figure 35, shown prior to installation on a beam.
Figure 41 is a rear view of the threaded rod hanger of Figure 35, shown prior to installation on a beam.
Figure 42 is a perspective view of a threaded rod hanger of another example embodiment of the present disclosure, shown prior to installation on a beam.
Figure 43 is a partially exploded perspective view of the threaded rod hanger of Figure 42, shown prior to installation on a beam.
Figure 44 is a side view of the threaded rod hanger of Figure 42, shown prior to installation on a beam.
Figure 45 is a side perspective of the threaded rod hanger of Figure 42, shown prior to installation on a beam.
Figure 46 is a front view of the threaded rod hanger of Figure 42, shown prior to installation on a beam.
Figure 47 is a rear view of the threaded rod hanger of Figure 42, shown prior to installation on a beam.
Figure 48 is a partial cross-sectional view of the threaded rod hanger of Figure 42, shown prior to installation on a beam.
Figure 49 is a first perspective view of a threaded rod hanger of another embodiment of the present disclosure supporting a threaded rod.
Figure 50 is a second perspective view of the threader rod hanger of Figure 49 supporting a threaded rod.
Figure 51 is an exploded perspective view of the threaded rod hanger of Figure 49 and part of a threaded rod (and shown with a somewhat different alternative shape).
Figure 52 is a first cross-sectional view of the threaded rod hanger of Figure 49 supporting a threaded rod (shown in fragmentary).
Figure 53 is a second cross-sectional view of the threaded rod hanger of Figure 49 supporting a received threaded rod (shown in fragmentary).
Figure 54 is a perspective view of a member of the threaded rod hanger of Figure 49 that includes the connector body and the receiver body of the threaded rod hanger of Figure 49.
Figures 55, 56, 57, and 58 are views of parts of the threaded rod hanger of Figure 49.
Figure 59 is a side perspective partially phantom view of certain the parts of threaded rod hanger of Figure 49.
Figures 60, 61, and 62 are side perspective partially phantom views of the threaded rod hanger of Figure 49.
Figure 63 is a perspective view of a threaded rod hanger of another embodiment of the present disclosure that is configured to support a threaded rod (which is not shown in Figure 63).
Figure 64 is an exploded perspective view of the threaded rod hanger of Figure 63 prior to assembly of the threaded rod hanger.
Figure 65 is a perspective view of the housing of the threaded rod hanger of Figure 63.
Figure 66 is a perspective view of one of the two locking pucks of the threaded rod hanger of Figure 63.
Figure 67 is a perspective view of the spring clip of the threaded rod hanger of Figure 63.
Figure 68A is a cross-sectional view of the threaded rod hanger of Figure 63 prior to receiving a threaded rod.
Figure 68B is a cross-sectional view of the threaded rod hanger of Figure 63 receiving a threaded rod.
Figure 68C is a cross-sectional view of the threaded rod hanger of Figure 63 after receiving the threaded rod and securely holding the threaded rod.
Figure 69 is a first perspective view of the assemble threaded rod hanger of Figure 63 after the receiving a threaded rod and showing the spring clip.
Figure 70 is a second perspective view of the assemble threaded rod hanger of Figure 63 after the receiving a threaded rod and showing the spring clip.
Figure 71 is a perspective view of example fasteners that can be part of the threaded rod hanger of Figure 63 and used to attached the threaded rod hanger to different overhead structures.
Figure 72 is a perspective view of example tool that that can used to attach the threaded rod hanger of Figure 63 to an overhead structure.

### DETAILED DESCRIPTION OF EXAMPLE EMBODIMENTS

While the features, devices, and apparatus described herein may be embodied in various forms, the drawings show and the specification describe certain exemplary and non-limiting embodiments. Not all of the components shown in the drawings and described in the specification may be required, and certain implementations may include additional, different, or fewer components. Variations in the arrangement and type of the components; the shapes, sizes, and materials of the components; and the manners of connections of the components may be made without departing from the spirit or scope of the claims. Unless otherwise indicated, any directions referred to in the specification reflect the orientations of the components shown in the corresponding drawings and do not limit the scope of the present disclosure. Further, terms that refer to mounting methods, such as mounted, attached, connected, and the like, are not intended to be limited to direct mounting methods but should be interpreted broadly to include indirect and operably mounted, attached, connected and like mounting methods. This specification is intended to be taken as a whole and interpreted in accordance with the principles of the present disclosure and as understood by one of ordinary skill in the art.

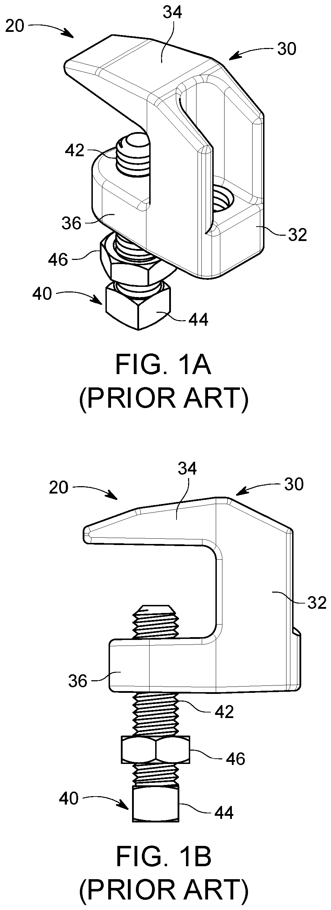

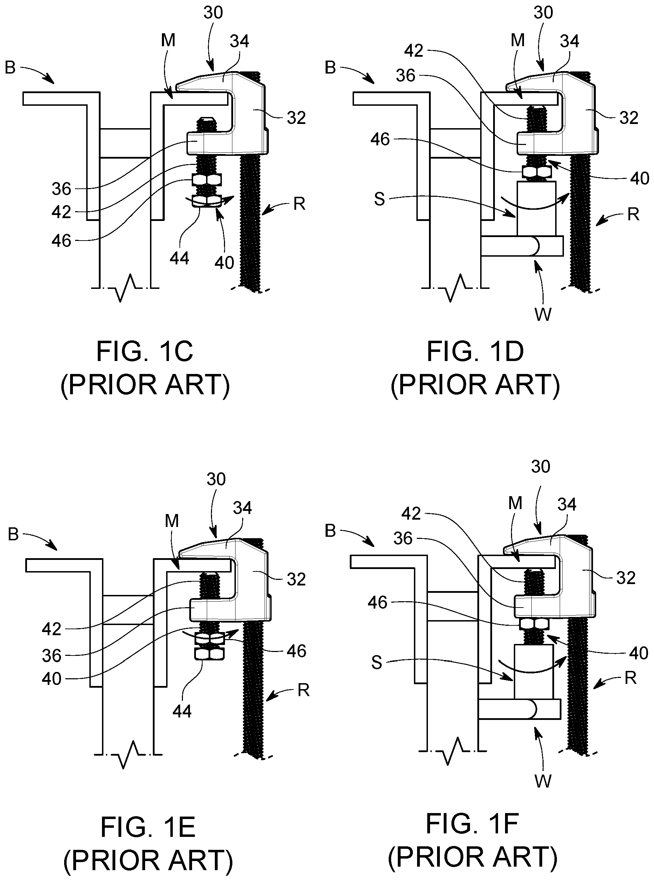

For a better understanding of the present disclosure, a known threaded rod hanger and the installation process for this known threaded rod hanger is first described with respect to Figures 1A, 1B, 1C, 1D, 1E, and 1F. This known threaded rod hanger 20 includes: (1) a connector 30 that includes (a) a threaded rod receiver 32, (b) a first top arm 34 connected to and extending from the threaded rod receiver 32, and (c) a second bottom arm 36 connected to and extending from the threaded rod receiver 32; (2) a set screw 40 threadedly connected to the second bottom arm 36; and (3) a jam nut 46 loosely threadedly mounted on the set screw 40. The set screw 40 includes a threaded shaft 42 and a square head 44 fixedly connected to the threaded shaft 42. The second bottom arm 36 includes an inner threaded opening (not shown or labeled) configured to threadedly receive the threaded shaft 42 of the set screw 40. The jam nut 46 is loosely threadedly mounted on the shaft 42 at a position spaced-apart from the square head 44 and is easily rotatable on the shaft 42 with respect to the square head 44 of the set screw 40. The square head 44 is sized for engagement by a 7/16 socket wrench W. The jam nut 46 is sized for engagement by a 9/16 socket wrench (not shown).

As best partly shown in Figures 1C, 1D, 1E, and 1F, the typical installation process for this known threaded rod hanger 20 includes numerous steps for the installer thereof. These steps include: (1) attaching the threaded rod R to the threaded rod receiver 32; (2) positioning the threaded rod hanger 20 relative to a horizontally extending member M of a beam B such that the first top arm 34 is above the member M of the beam B and the second bottom arm 36 is below the member M of the beam B; (3) finger tightening the set screw 40; (4) using a torque wrench W and a 7/16 socket S to torque the set screw 40 to 5 ft. lbs. (or if no torque wrench is used, finger tightening plus ½ turn of the set screw 40 using a wrench); (5) finger tightening the jam nut 46 to be in a position engaging a bottom surface (not labeled) of the second bottom arm 36 of the connector 30 of the threaded rod hanger 20; and (6) using a wrench W and a 7/16 socket S to torque the set screw 40 an additional 1/4-1/2 turn to lock the jam nut 43 in engagement with the bottom surface of the bottom arm 36. This last step is a common practice in the field.

This installation process has various issues. The first issue is that this installation process has numerous steps and takes the installer a relatively long time (especially since the installer may need to install hundreds of these thread rod hangers). The second issue is that the installer can have a limited stroke with the wrench W due to the proximity with the threaded rod R connected to and extending downwardly from the threaded rod receiver 32. The third issue is that set screw 40 under-torque can cause the entire threaded rod hanger 20 to pivot or slip on the member M of the beam B and in certain instances slip off of the member M of the beam B. The fourth issue is that the set screw 40 can be over-torqued, which can lead to breakage of part of the threaded rod hanger 20 such as one of the arms 34 or 36 thereof. The fifth issue is that the installer must be elevated off floor and within arms reach of the beam B, which can make such installation adjacent to existing mechanical, electrical, and plumbing components more difficult. The sixth issue is that the jam nut 46 may not be completely tightened due to difficult installation adjacent to existing mechanical, electrical, and plumbing components. The seventh issue is that the threaded rod may have a burr or may have otherwise damaged thread(s) making installation into threaded rod receiver 32 difficult or impossible.

Various embodiments of the present disclosure provide a threaded rod hanger that is configured to facilitate quickly and easily securely attaching a threaded rod on an overhead structure such as a beam and that is configured to overcome the above described issues. In various embodiments of the present disclosure, the threaded rod hanger is quickly and easily attachable to an overhead structure such as a beam with the threaded rod already attached and extending downwardly from the threaded rod hanger of the present disclosure in three main steps such as described below.

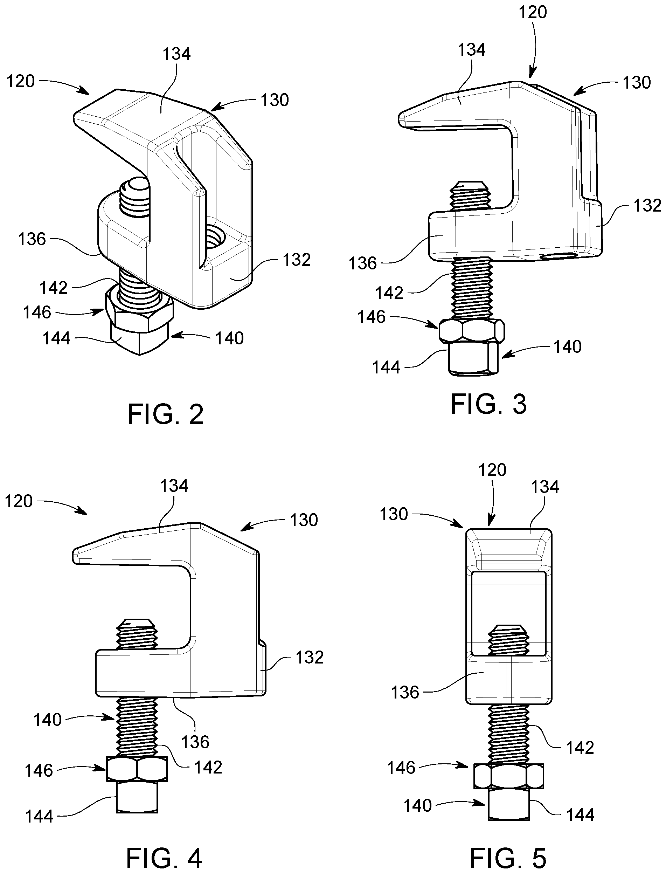

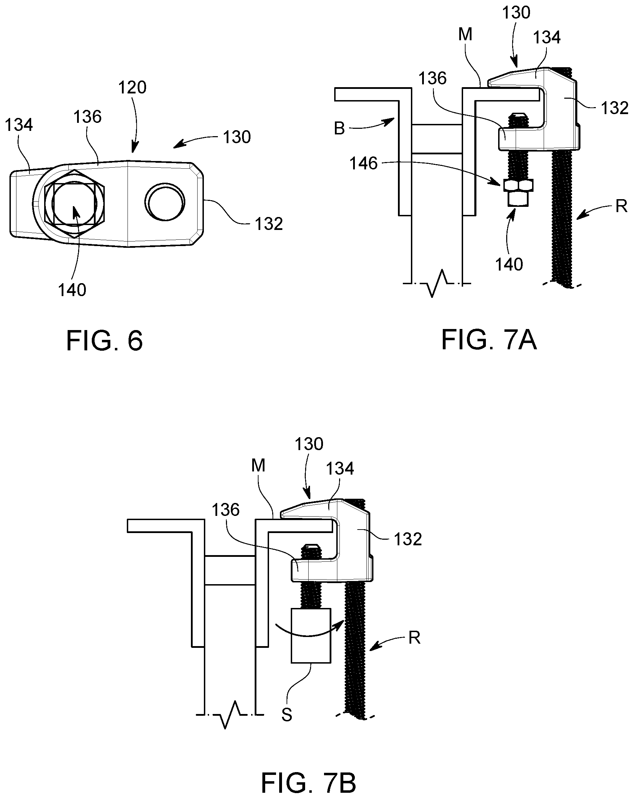

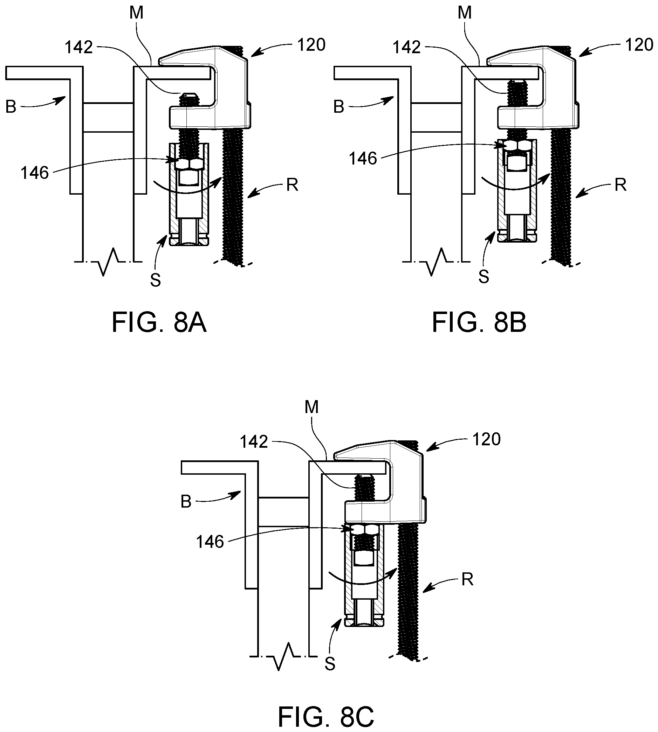

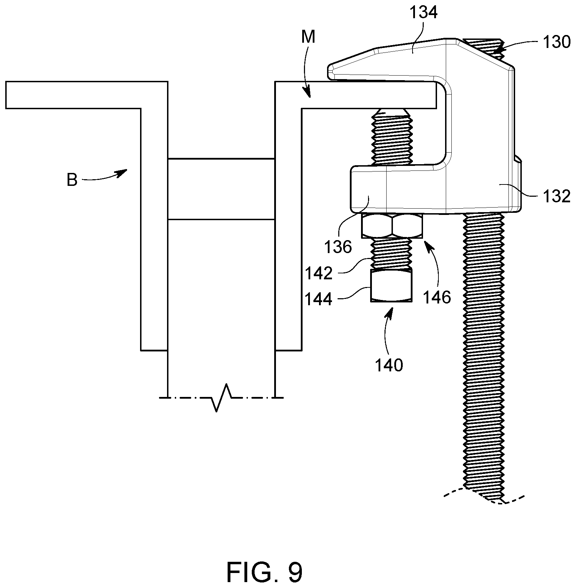

Figures 2, 3, 4, 5, 6, 7A, 7B, 8A, 8B, 8C, 9, 10, and 11 illustrate a threaded rod hanger 120 of one example embodiment of the present disclosure. In this example embodiment, the threaded rod hanger 120 is a controlled torque installed threaded rod hanger, wherein the amount of torque by which the free end (not labeled) of the shaft 142 of the set screw 140 engages against the bottom surface (not labeled) of the member M of the beam B is set during the controlled manufacturing process of the threaded rod hanger 120 such as described below.

This threaded rod hanger 120 includes: (1) a connector 130 that includes (a) a threaded rod receiver 132, (b) a first top arm 134 connected to and extending from the threaded rod receiver 132, and (c) a second bottom arm 136 connected to and extending from the threaded rod receiver 132; (2) a set screw 140 threadedly connected to the second arm 136; and (3) a jam nut 146 threadedly mounted on the set screw 140 and initially in frictional engagement with the head of the set screw 140 at a predetermined amount of torque referred to herein as an "on-torque".

In this example embodiment, the threaded rod receiver 132 includes a single internally threaded section for threadedly receiving the threaded rod R, although in other embodiments described herein, the threaded rod receiver can include more than one internally threaded section.

The set screw 140 includes a threaded shaft 142 and a square head 144 fixedly connected to the threaded shaft 142. The second (bottom) arm 136 includes an inner threaded opening (not shown) configured to threadedly receive the threaded shaft 142 of the set screw 140. The jam nut 146 is threadedly mounted on the shaft 142 at a position adjacent to, in substantial frictional engagement with the head 144 such that rotation of the jam nut 146 (when rotated by the installer) causes rotation of the head 144 and thus the shaft 142 of the set screw 140. The jam nut 146 is only rotatable with respect to the shaft 142 (as described below) after being disengaged from the square head 144 of the set screw 140.

The jam nut 146 is sized for engagement by a 9/16 socket (and thus has an outer width which is 0.6540 inches from point to point and 0.5625 inches from side to side).

The square head 144 is sized for engagement by a 7/16 socket (and thus has an outer width which is 0.375 inches from point to point and 0.545 inches from side to side).

Thus, the jam nut 146 has a larger outer width than the square head 144 of the set screw 140.

The head 144 of set screw 140 thus has an outer width that is smaller than the outer width of the jam nut 146 such that a socket (such as a 9/16 socket) can be positioned over the head 144 of the set screw 140 and onto the jam nut 146 and engage the jam nut 146 as further described below. It should be appreciated that the relative sizes and shapes of the jam nut 146 and head 144 of set screw 140 can vary in accordance with the present disclosure.

In various embodiments, the jam nut 146 is tightened to set screw 140 and particularly against the head 144 of the set screw 140 with 5.5 - 6 ft. lbs. of torque (on-torque). In various embodiments, this frictional engagement is created during the manufacturing process of the threaded rod hanger 120. This frictional engagement torque (referred to herein as the on-torque) must be greater than the torque required to rotate set screw 140 in the inner threaded opening (not shown) of the second (bottom) arm 136 that is configured to threadedly receive the threaded shaft 142 of the set screw 140. It should be appreciated that the specific amount of predetermined frictional engagement (the on-torque) can vary in accordance with the present disclosure.

In various embodiments, an additional engagement mechanism (not shown) is used to enhance this frictional engagement. In various embodiments, the additional engagement mechanism is an adhesive. In various embodiments, the additional engagement mechanism is one or more outwardly extending ridges, teeth, or other member extending from the jam nut toward the head of the set screw. In various embodiments, the additional engagement mechanism is one or more outwardly extending ridges, teeth, or other member extending from the head toward the jam nut. In various embodiments, the additional engagement mechanism is one or more outwardly extending ridges, teeth, or other member extending from the jam nut toward the head of the set screw and one or more outwardly extending ridges, teeth, or other member extending from the head toward the jam nut.

The installation procedure for this threaded rod hanger 120 includes the following steps for the installer: (1) attaching the threaded rod R to the threaded rod receiver 132; (2) attaching a 9/16 socket S (with an extended handle or an electric impact driver which is not shown) over the head 144 of the set screw 140 and into engagement with the jam nut 146; (3) positioning the threaded rod hanger 120 relative to the member M of a beam B such that the first top arm 134 is above the member M of the beam B and the second bottom arm 136 is below the member M of the beam B; and (4) causing an electric impact driver connected to the 9/16 socket to torque the jam nut 146, which rotates the jam nut 146, and which transmits a portion of the on-torque (such as up to 5 ft. lbs.) to head 144 of the set screw 140, which also causes the head 144 and the set screw 140 to rotate relative to the second bottom arm 136.

This rotation of the jam nut 146: (1) moves the jam nut 146 and the set screw 140 upwardly together at the same rate; (2) moves the set screw 140 upwardly such that the free end (not labeled) of the shaft 142 of the set screw 140 engages against the bottom surface (not labeled) of the member M of the beam B; (3) causes separation of the jam nut 146 from the head of the set screw; and (4) causes the jam nut 144 to be tightened in frictional engagement against the bottom surface (not labeled) of the second bottom arm 136. Thus, the installer secures the set screw 140 and the jam nut 144 in one single operation. It should be appreciated that the jam nut 146 disengages from the head 144 of the set screw 140 when the torque on the jam nut 146 is greater than a portion of the amount of the on-torque frictionally engaging (and thus holding) the jam nut to the head of the set screw.

The present disclosure contemplates that because the jam nut 146 is pre-tightened in sufficient frictional engagement with the head 144 of the set screw 140 by the manufacturer such that these two components will act as one until a sufficient amount of torque exists to separate them.

The present disclosure contemplates that in various embodiments the torque to separate the jam nut 146 from the head 144 (off-torque) is approximately 10-20% less than the torque used to frictionally engage jam nut 146 with set screw head 144 (on-torque). The off-torque represents the torque by which the free end (not labeled) of the shaft 142 of the set screw 140 engages against the bottom surface (not labeled) of the member M of the beam B.

The present disclosure contemplates that in various embodiments the set screw 140 will tighten onto the member M of the beam B until approximately 5 ft-lb of torque is applied, at which time the jam nut 146 will then loosen from being frictionally engaged with and adjacent to the head 144 of the set screw 140 and will continue to be driven by the electric impact driver or manually by turning a wrench until the jam nut 146 tightens to the second bottom arm 136 completing the installation process. In other words, the rotation jam nut 146 will cause the set screw 140 to sufficiently engage with a controlled installation torque the bottom surface of the member M of the beam B and also cause the jam nut 146 sufficiently engage the bottom arm 136. Thus, the manufacturer-applied torque between the jam nut 146 and set screw 140 controls (and can limit) the actual amount of torque applied to the set screw 140 during field installation (and thus the amount of clamp load at which the free end (not labeled) of set screw 140 engages the bottom surface of the member M of the beam B) because after the jam nut 146 disengages from the head 144 of the set screw 140, no further torque is applied (or needs to be applied) to the set screw 140. In other words, the amount of on-torque between the jam nut 146 and the head 144 of the set screw 140 applied by the manufacturer of the threaded rod hanger 120 controls (and can limit) the amount of actual torque applied to the set screw 140 and thus the amount of clamp load at which the free end (not labeled) of set screw 140 engages the beam in the field during the installation process.

In various of the example embodiments herein, the connector is a single monolithically formed member made of iron. In other example embodiments, the connector can be made separate members and suitably attached to each other. It should be appreciated that the connector can be made from another suitable material in accordance with the present disclosure. It should be appreciated that features may be added to the surfaces of the connector which attach to the beam to improve installation.

In various of the example embodiments herein, the set screw is a single monolithically formed member made of steel. In other example embodiments, the set screw can be made separate members and suitably attached to each other. It should be appreciated that the set screw can be made from another suitable material in accordance with the present disclosure.

In various of the example embodiments herein, the jam nut is a single monolithically formed member made of steel. It should be appreciated that the jam nut can be made from another suitable material in accordance with the present disclosure.

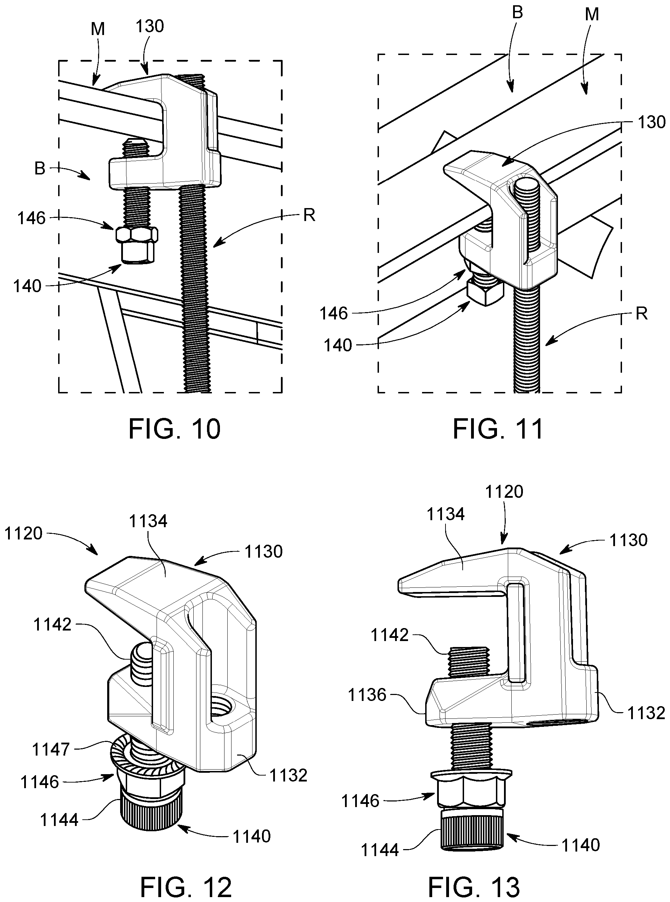

Figures 12, 13, 14, and 15 illustrate a threaded rod hanger 1120 of another example embodiment of the present disclosure. In this example embodiment, the threaded rod hanger 1120 is a controlled torque installed threaded rod hanger, wherein the amount of torque is set during the controlled manufacturing process for the threaded rod hanger 1120 such as described below.

This threaded rod hanger 1120 includes: (1) a connector 1130 that includes: (a) a threaded rod receiver 1132, (b) a first top arm 1134 connected to and extending from the threaded rod receiver 1132, and (c) a second bottom arm 1136 connected to and extending from the threaded rod receiver 1132; (2) a set screw 1140 connected to the second arm 1136; and (3) a jam nut 1146 threadedly mounted on the set screw 1140.

In this example embodiment, the threaded rod receiver 1132 includes a single internally threaded section for threadedly receiving the threaded rod R, although in other embodiments described herein, the threaded rod receiver can include more than one internally threaded section.

The set screw 1140 includes a threaded shaft 1142 and a cylindrical head 1144 fixedly connected to the threaded shaft 1142. The second (bottom) arm 1136 includes an inner threaded opening (not shown) configured to threadedly receive the threaded shaft 1142 of the set screw 1140. The jam nut 1146 is threadedly mounted on the shaft 1142 at a position adjacent to, in substantial frictional engagement with the head 1144 such that rotation of the jam nut 1146 (when rotated) causes rotation of the head 1144 and thus the shaft 1142 of the set screw 1140. The jam nut 1146 is only rotatable with respect to the shaft 1142 (as described below) after being disengaged from the cylindrical head 1144 of the set screw 1140.

The head 2144 includes an inner engagement member 2145 sized for receiving and engagement by a tool and in this example a hex wrench. This enables, during the manufacturing process, the manufacturer to employ a tool such as a hex wrench to cause the frictional engagement between the head 2144 of the set screw 2140 and the jam nut 2146. This feature also enables an installer to loosen the set screw 2140 to remove and/or to move the threaded rod hanger on the beam after initial installation if needed.

The jam nut 1146 is sized for engagement by a 9/16 socket (and thus has an outer width which is 0.6540 inches from point to point and 0.5625 inches from side to side). The jam nut 1146 includes an inner engagement surface 1147 that in this example includes longitudinally extending spaced apart ridges that are configured to cause an enhanced engagement with the bottom surface of the second bottom arm 1136.

The cylindrical head 1144 of set screw 1140 is slightly smaller than outer larger outer width of the jam nut 1146.

Thus, the jam nut 1146 thus has a slightly larger outer width than the cylindrical head 1144 of the set screw 1140.

The cylindrical head 1144 thus has an outer diameter that is smaller than the outer width of the jam nut 1146 such that a 9/16 socket can be positioned over the cylindrical head 1144 of the set screw 1140 and onto the jam nut 1146 and engage the jam nut 1146 as further described below. The cylindrical head 1144 includes an outer engagement surface that in this example longitudinally extending spaced apart ridges. The ridges of socket head cap screw improve grip using a person's fingers or a clamping tool like pliers.

In various embodiments, the jam nut 1146 is tightened to set screw 1140 and particularly against the head 1144 of the set screw 140 with 5.5 - 6 ft. lbs. of torque. In various embodiments, this frictional engagement is created during the manufacturing process.

The installation procedure for this threaded rod hanger 1120 includes the following steps for the installer: (1) attaching the threaded rod R to the threaded rod receiver 1132; (2) attaching a 9/16 socket S (with an extended handle or an electric impact driver which is not shown) over the cylindrical head 1144 over the set screw 1140 and into engagement with the jam nut 1144; (3) positioning the threaded rod hanger 1120 relative to the member M of a beam B such that the first top arm 1134 is above the member M of the beam B and the second bottom arm 1136 is below the member M of the beam B; and (4) causing an electric impact driver connected to the 9/16 socket to torque the jam nut 1146 which rotates the jam nut 1146, and which transmits a portion of the on-torque up to 5 ft. lbs. of torque to head 1144 of the set screw 1140, and which also causes the head 1144 and the set screw 1140 to rotate relative to the second bottom arm 1146.

As with the above embodiment, the set screw 1140 will tighten onto the member M of the beam B until approximately 5 ft-lb of torque is applied, at which time the jam nut 1146 will then loosen from being frictionally engaged with and adjacent to the head 1144 of the set screw 1140 and will continue to be driven by the electric impact driver until the jam nut 1146 tightens to the second bottom arm 1136 completing the installation process. The rotation jam nut 1146 will cause the set screw 1140 to sufficiently engage with a controlled installation torque the bottom surface of the member M of the beam B and also cause the jam nut 1146 sufficiently engage the bottom arm 1136. Thus, the manufacturer-applied torque between the jam nut 1146 and set screw 1140 controls (and can limit) the actual amount of torque applied to the set screw 1140 during field installation (and thus the amount of clamp load at which the free end (not labeled) of set screw 1140 engages the bottom surface of the member M of the beam B) because after the jam nut 1146 disengages from the head 1144 of the set screw 1140, no further torque is applied (or needs to be applied) to the set screw 1140. In other words, the amount of on-torque between the jam nut 1146 and the head 1144 of the set screw 1140 applied by the manufacturer of the threaded rod hanger 1120 controls (and can limit) the amount of actual torque applied to the set screw 1140 and thus the amount of clamp load at which the free end (not pictured) of set screw 1140 engages the beam in the field during the installation process.

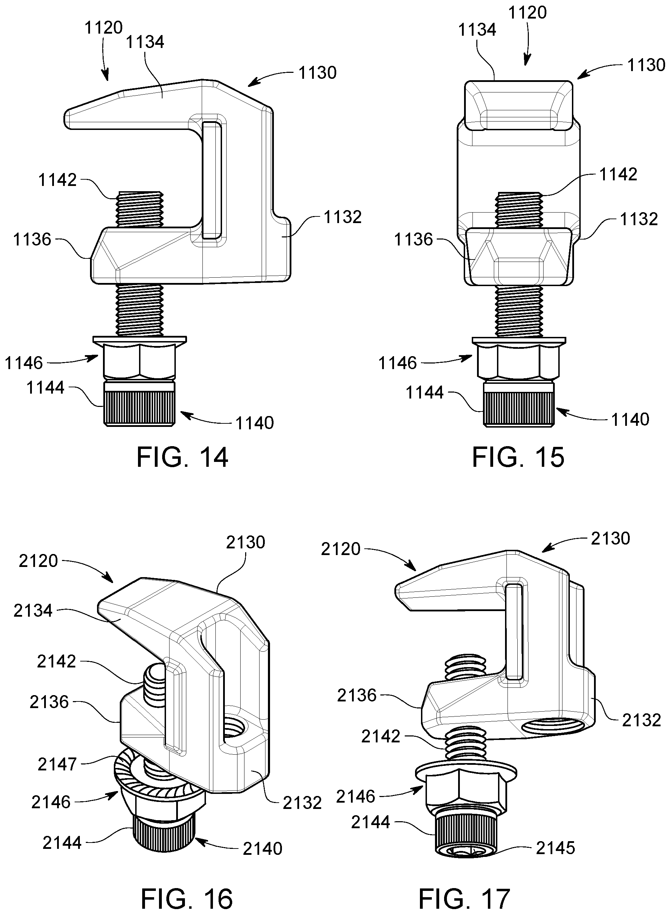

Figures 16, 17, 18, and 19 illustrate a threaded rod hanger 2120 of another example embodiment of the present disclosure. In this example embodiment, the threaded rod hanger 2120 is a controlled torque installed threaded rod hanger, wherein the amount of torque is set during the controlled manufacturing process for the threaded rod hanger 2120 such as described below.

This threaded rod hanger 2120 includes: (1) a connector 2130 that includes: (a) a threaded rod receiver 2132, (b) a first top arm 2134 connected to and extending from the threaded rod receiver 2132, and (c) a second bottom arm 2136 connected to and extending from the threaded rod receiver 2132; (2) a set screw 2140 connected to the second arm 2136; and (3) a jam nut 2146 threadedly mounted on the set screw 2140.

In this example embodiment, the threaded rod receiver 2132 includes a single internally threaded section for threadedly receiving the threaded rod R, although in other embodiments described herein, the threaded rod receiver can include more than one internally threaded section.

The set screw 2140 includes a threaded shaft 2142 and a cylindrical head 2144 fixedly connected to the threaded shaft 2142. The second (bottom) arm 2136 includes an inner threaded opening (not shown) configured to threadedly receive the threaded shaft 2142 of the set screw 2140. The jam nut 2146 is threadedly mounted on the shaft 2142 at a position adjacent to, in substantial frictional engagement with the head 2144 such that rotation of the jam nut 2146 (when rotated) causes rotation of the head 2144 and thus the shaft 2142 of the set screw 2140. The jam nut 2146 is only rotatable with respect to the shaft 2142 (as described below) after being disengaged from the cylindrical head 2144 of the set screw 2140.

The head 2144 includes an inner engagement member 2145 sized for receiving and engagement by a tool and in this example a hex wrench. This enables, during the manufacturing process, the manufacturer to employ a tool such as a hex wrench to cause the frictional engagement between the head 2144 of the set screw 2140 and the jam nut 2146. This feature also enables an installer to loosen the set screw 2140 to remove and/or to move the threaded rod hanger on the beam after initial installation if needed.

The jam nut 2146 is sized for engagement by a 11/16 socket (and thus has an outer width which is 0.794 inches from point to point and 0.688 inches from side to side). The jam nut 2146 includes an inner engagement surface 2147 that in this example includes longitudinally extending spaced apart ridges that are configured to cause an enhanced engagement with the bottom surface of the second bottom arm 2136.

The cylindrical head 2144 is substantially smaller than outer larger outer width of the jam nut 2146.

Thus, the jam nut 2146 thus has a substantially larger outer width than the cylindrical head 2144 of the set screw 2140.

The head 2144 thus has an outer width that is smaller than the outer width of the jam nut 2146 such that a 11/16 socket can be positioned over the head 2144 of the set screw 2140 and onto the jam nut 2146 and engage the jam nut 2146 as further described below. The cylindrical head 2144 includes an outer engagement surface that in this example longitudinally extending spaced apart ridges. The ridges of socket head cap screw improve grip using a person's fingers or a clamping tool like pliers.

In various embodiments, the jam nut 2146 is tightened to set screw 2140 and particularly against the head 2144 of the set screw 140 with 5.5 - 6 ft. lbs. of torque. In various embodiments, this frictional engagement is created during the manufacturing process.

The installation procedure for this threaded rod hanger 2120 includes the following steps for the installer: (1) attaching the threaded rod R to the threaded rod receiver 2132; (2) attaching a 11/16 socket S (with an extended handle or an electric impact driver which is not shown) over the cylindrical head 2144 over the set screw 2140 and into engagement with the jam nut 2144; (3) positioning the threaded rod hanger 1120 relative to the member M of a beam B such that the first top arm 2134 is above the member M of the beam B and the second bottom arm 2136 is below the member M of the beam B; and (4) causing the electric impact driver connected to the 11/16 socket to torque the jam nut 2146 which rotates the jam nut 2146, and which transmits a portion of the on-torque up to 5 ft. lbs. of torque to head 2144 of the set screw 2140 and also causes the head 2144 and the set screw 2140 to rotate relative to the second bottom arm 2146.

As with the above embodiments, the set screw 2140 will tighten onto the member M of the beam B until approximately 5 ft-lb of torque is applied, at which time the jam nut 2146 will then loosen from being frictionally engaged with and adjacent to the head 2144 of the set screw 2140 and will continue to be driven by the electric impact driver until the jam nut 2146 tightens to the second bottom arm 2136 completing the installation process. The rotation jam nut 2146 will cause the set screw 2140 to sufficiently engage with a controlled installation torque the bottom surface of the member M of the beam B and also cause the jam nut 2146 sufficiently engage the bottom arm 2136. Thus, the manufacturer-applied torque between the jam nut 2146 and set screw 2140 controls (and can limit) the actual amount of torque applied to the set screw 2140 during field installation (and thus the amount of clamp load at which the free end (not labeled) of set screw 2140 engages the bottom surface of the member M of the beam B) because after the jam nut 2146 disengages from the head 2144 of the set screw 2140, no further torque is applied (or needs to be applied) to the set screw 2140. In other words, the amount of on-torque between the jam nut 2146 and the head 2144 of the set screw 2140 applied by the manufacturer of the threaded rod hanger 2120 controls (and can limit) the amount of actual torque applied to the set screw 2140 and thus the amount of clamp load at which the free end (not pictured) of set screw 2140 engages the beam in the field during the installation process.

It should additionally be appreciated that the threaded rod hanger can include on or more feature that provide for additional engagement(s) with the beam and/or the member of the beam. In the example threaded rod hanger 1120, the connector 2130 includes outwardly extending wings (not labeled) that are configured to engage the member of the beam when the threaded rod hanger is installed on the member of the beam. These wings function to widen the surface of the threaded rod hanger that engages the member of the beam to minimize rotation of the threaded rod hanger relative to the beam during the installation process and thereafter. It should be appreciated that the threaded rod hanger can include other suitable engagers such as teeth (not shown) to engage the beam.

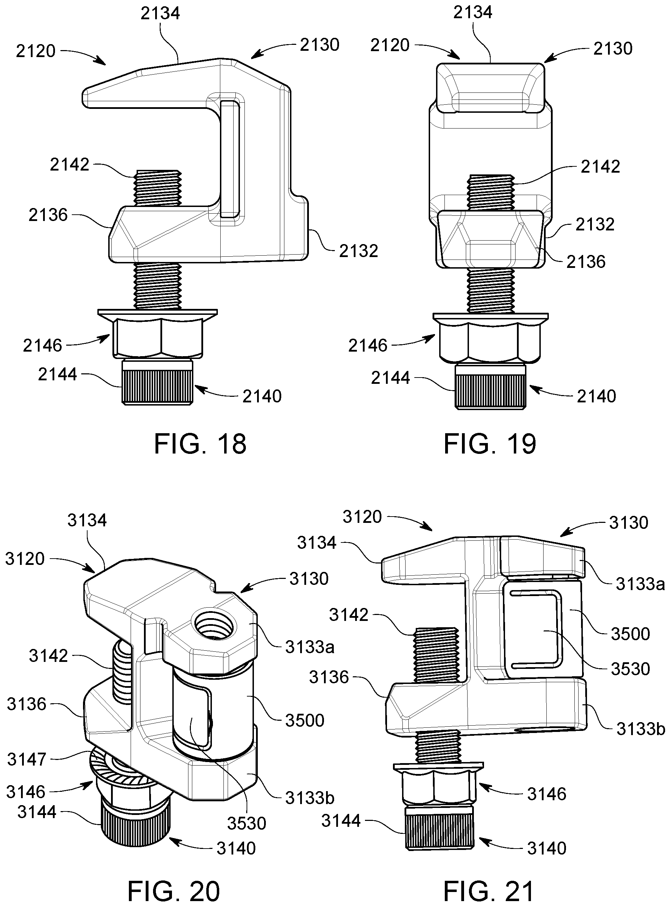

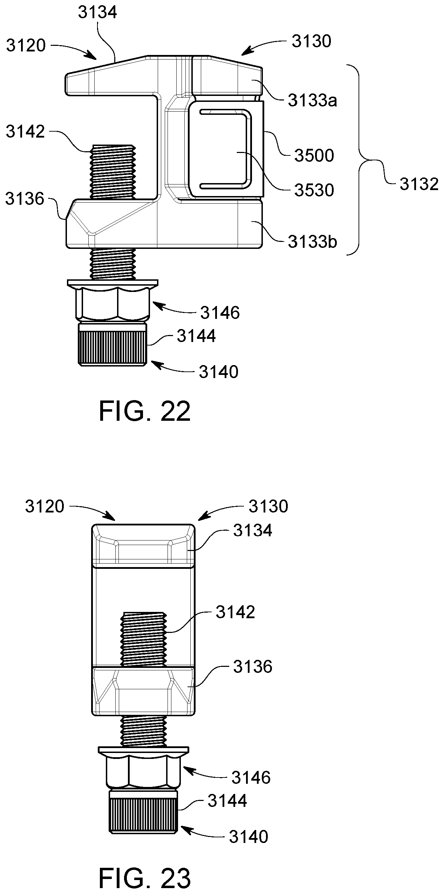

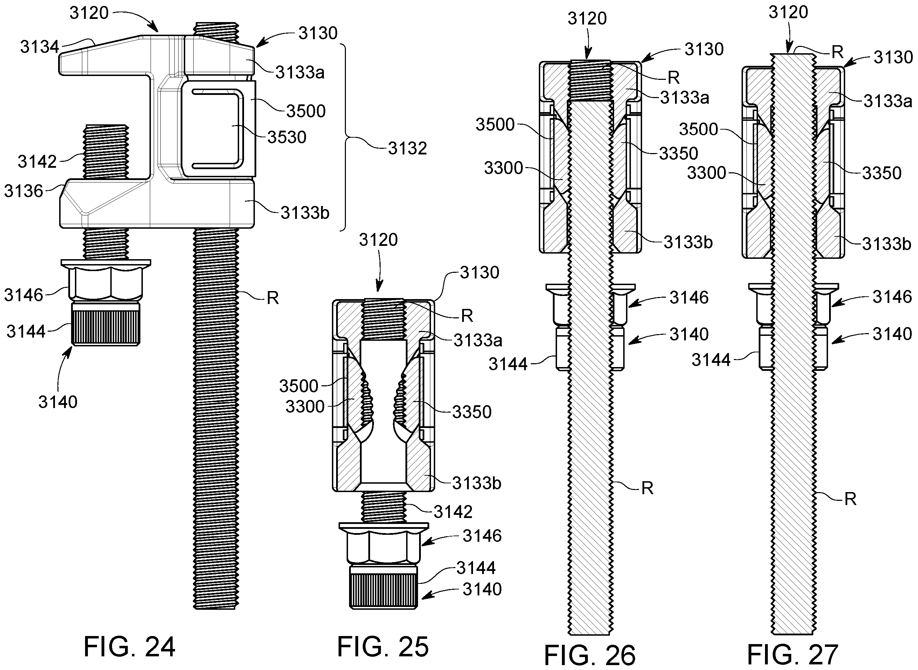

Figures 20, 21, 22, 23, 24, 25, 26, and 27 illustrate a threaded rod hanger 3120 of another example embodiment of the present disclosure. In this example embodiment, the threaded rod hanger 3120 is a controlled torque installed threaded rod hanger, wherein the amount of torque is set during the controlled manufacturing process for the threaded rod hanger 3120 such as described below.

This threaded rod hanger 3120 includes: (1) a connector 3130 that includes: (a) a threaded rod receiver 3132, (b) a first top arm 3134 connected to and extending from the threaded rod receiver 3132, and (c) a second bottom arm 3136 connected to and extending from the threaded rod receiver 3132; (2) a set screw 3140 connected to the second arm 3136; and (3) a jam nut 3146 threadedly mounted on the set screw 3140. In this embodiment, the shape of the connector 3130 is differently contoured for molding, gripping, and/or other purposes.

The set screw 3140 includes a threaded shaft 3142 and a cylindrical head 3144 fixedly connected to the threaded shaft 3142.

The second (bottom) arm 3136 includes an inner threaded opening (not shown) configured to threadedly receive the threaded shaft 3142 of the set screw 3140.

The jam nut 3146 is threadedly mounted on the shaft 3142 at a position adjacent to, in substantial frictional engagement with the head 3144 such that rotation of the jam nut 3146 (when rotated) causes rotation of the head 3144 and thus the shaft 3142 of the set screw 3140. The jam nut 3146 is only rotatable with respect to the shaft 3142 (as described below) after being disengaged from the cylindrical head 3144 of the set screw 3140.

In this example embodiment, the threaded rod receiver 3132 includes two sections for receiving the threaded rod R. More specifically, the threaded rod receiver 3132 includes a housing formed from an internally threaded upper member 3133a and a non-threaded lower member 3133b. The threads can be of the same or compatible thread tolerances or can be of different (such as wider) thread tolerances when compared to the example threaded rod R.

The threaded rod hanger 3120 also include (1) two separate and independent internally threaded locking pucks 3300 and 3350; and (2) a spring clip 3500.

In this example the lower member 3133b is not internally threaded to enable the threaded rod R to be inserted through the lower member 3133b and into engagements with the pucks 3300 and 3350. The upper member 3133a enables the threaded rod R to be further connected to the threaded rod receiver 3132 for adjustment purposes.

The upper member 3133a and the lower member 3133b each define one or more puck receiving areas (not labeled).The two locking pucks 3300 and 3350 are identical in this example embodiment, and thus only locking puck 3300 is described herein for brevity. The locking puck 3300 includes an inner threaded section 3310 (not shown) and outer spring engagement section 3330 (not shown). The inner threaded section 3310 is configured to engage and secure the threaded rod R. The outer spring engagement section 3330 is configured to be engaged by the spring clip 3500.

The spring clip 3500 includes a substantially cylindrical body 3510 having two puck engagement tabs 3530 and 3540. The spring clip 3500 is configured to be positioned around the housing and in engagement with the locking pucks 3300 and 3350. The spring clip 3500 is configured to apply radially inward biasing of the locking pucks 3300 and 3350 to cause the locking pucks 3300 and 3350 to securely engage the threaded rod R, and in a manner that allows slight outward movement of the locking pucks 3300 and 3350 when the threaded rod is inserted into the housing. The spring clip 3500 is made from steel but can be made from other suitable materials.

The locking pucks 3300 and 3350, and the spring clip 3500 are thus configured to: (a) receive a threaded rod such as threaded rod R via an upward insertion (such as upward pushing) of the threaded rod R through the opening (not labeled) in the bottom end (not labeled) of the housing 3133b; (b) thereafter, secure the threaded rod R in the housing via engagement of the locking pucks 3300 and 3350 with the threaded rod R wherein the locking pucks are radially inwardly biased by the spring clip 3500; and (c) thereafter enable upward and downward adjustment of the height of the threaded rod R via rotation of the threaded rod R relative to the locking pucks 3300 and 3350, and the spring clip 3500.

The downward force of the threaded rod R creates an inward force on and/or inward movement of one or both of the locking pucks 3300 and 3350, further magnifying the inward spring force that causes the locking pucks 3300 and 3350 to engage with the threaded rod R. It should be appreciated that in certain embodiments only one locking puck may be implemented.

The jam nut 3146 is sized for engagement by a 9/16 socket (and thus has an outer width which is 0.650 inches from point to point and 0.5625 inches from side to side). The jam nut 3146 includes an inner engagement surface 3147 that in this example includes longitudinally extending spaced apart ridges that are configured to cause an enhanced engagement with the bottom surface of the second bottom arm 3136.

The cylindrical head 3144 is slightly smaller than outer larger outer width of the jam nut 3146.

Thus, the jam nut 3146 thus has a slightly larger outer width than the cylindrical head 3144 of the set screw 3140.

The head 3144 thus has an outer width that is smaller than the outer width of the jam nut 3146 such that a 9/16 socket can be positioned over the head 3144 of the set screw 3140 and onto the jam nut 3146 and engage the jam nut 3146 as further described below.

In various embodiments, the jam nut 3146 is tightened to set screw 3140 and particularly against the head 3144 of the set screw 3140 with 5.5 - 6 ft. lbs. of torque. In various embodiments, this frictional engagement is created during the manufacturing process.

The installation procedure for this threaded rod hanger 3120 includes the following steps for the installer: (1) attaching the threaded rod R to the threaded rod receiver 3132; (2) attaching a 9/16 socket S (with an extended handle and an electric impact driver which is not shown) over the cylindrical head 3144 over the set screw 3140 and into engagement with the jam nut 3144; (3) positioning the threaded rod hanger 3120 relative to the member M of a beam B such that the first top arm 3134 is above the member M of the beam B and the second bottom arm 3136 is below the member M of the beam B; and (4) causing the electric impact driver connected to the 9/16 socket to torque the jam nut 3146 which rotates the jam nut 3146, and which transmits a portion of the on-torque up to 5 ft. lbs. of torque to head 3144 of the set screw 3140 and also causes the head 3144 and the set screw 3140 to rotate relative to the second bottom arm 3146.

As with the above embodiments, the set screw 3140 will tighten onto the member M of the beam B until approximately 5 ft-lb of torque is applied, at which time the jam nut 3146 will then loosen from being frictionally engaged with and adjacent to the head 3144 of the set screw 3140 and will continue to be driven by the electric impact driver until the jam nut 3146 tightens to the second bottom arm 3136 completing the installation process. The rotation jam nut 3146 will cause the set screw 3140 to sufficiently engage with a controlled installation torque the bottom surface of the member M of the beam B and also cause the jam nut 3146 sufficiently engage the bottom arm 3136. Thus, the manufacturer-applied torque between the jam nut 3146 and set screw 3140 controls (and can limit) the actual amount of torque applied to the set screw 3140 during field installation (and thus the amount of clamp load at which the free end (not labeled) of set screw 3140 engages the bottom surface of the member M of the beam B) because after the jam nut 3146 disengages from the head 3144 of the set screw 3140, no further torque is applied (or needs to be applied) to the set screw 3140. In other words, the amount of on-torque between the jam nut 3146 and the head 3144 of the set screw 3140 applied by the manufacturer of the threaded rod hanger 3120 controls (and can limit) the amount of actual torque applied to the set screw 3140 and thus the amount of clamp load at which the free end (not pictured) of set screw 3140 engages the beam in the field during the installation process.

It should additionally be appreciated that the threaded rod hanger can include one or more feature that provide for additional engagement(s) with the beam and/or the member of the beam. In the example threaded rod hanger 3120, the connector 3130 includes outwardly extending wings (not labeled) that are configured to engage the member of the beam when the threaded rod hanger is installed on the member of the beam. These wings function to widen the surface of the threaded rod hanger that engages the member of the beam to minimize rotation of the threaded rod hanger relative to the beam during the installation process and thereafter. It should be appreciated that the threaded rod hanger can include other suitable engagers such as teeth (not shown) to engage the beam.

In this embodiment, the threaded rod hanger 3120 includes the upper and lower members 3133a and 3133b that are engaged by the pucks 3300 and 3350.

In the next described embodiment, the threaded rod hanger 4120 also includes a further member 4133c as described below that is between the upper and lower members 4133a and 4133b that are engaged by the pucks 4300 and 4350.

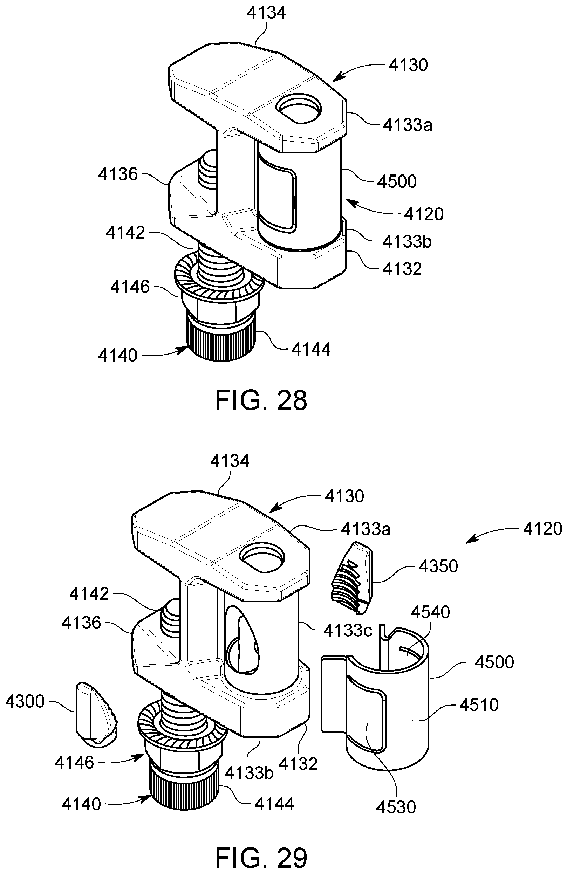

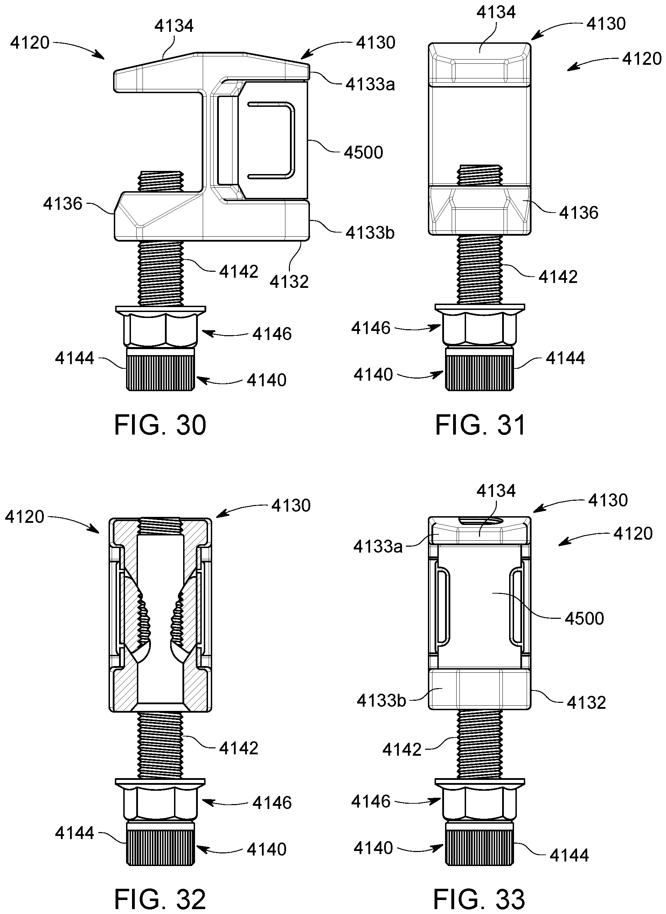

More specifically, Figures 28, 29, 30, 31, 32, and 33 illustrate a threaded rod hanger 4120 of another example embodiment of the present disclosure. In this example embodiment, the threaded rod hanger 4120 is a controlled torque installed threaded rod hanger, wherein the amounts of torque is set during the controlled manufacturing process for the threaded rod hanger 4120 such as described below.

This threaded rod hanger 4120 includes: (1) a connector 4130 that includes: (a) a threaded rod receiver 4132, (b) a first top arm 4134 connected to and extending from the threaded rod receiver 4132, and (c) a second bottom arm 4136 connected to and extending from the threaded rod receiver 4132; (2) a set screw 4140 connected to the second arm 4136; and (3) a jam nut 4146 threadedly mounted on the set screw 4140.

The set screw 4140 includes a threaded shaft 4142 and a cylindrical head 4144 fixedly connected to the threaded shaft 4142.

The second (bottom) arm 4136 includes an inner threaded opening (not shown) configured to threadedly receive the threaded shaft 4142 of the set screw 4140.

The jam nut 4146 is threadedly mounted on the shaft 4142 at a position adjacent to, in substantial frictional engagement with the head 4144 such that rotation of the jam nut 4146 (when rotated) causes rotation of the head 4144 and thus the shaft 4142 of the set screw 4140. The jam nut 4146 is only rotatable with respect to the shaft 4142 (as described below) after being disengaged from the cylindrical head 4144 of the set screw 4140.

In this example embodiment, the threaded rod receiver 4132 includes two sections for receiving the threaded rod R. More specifically, the threaded rod receiver 4132 includes a housing formed from an internally threaded upper member 4133a and a non-internally threaded lower member 4133b.

The threaded rod hanger 4120 includes: (1) two separate and independent internally threaded locking pucks 4300 and 4350; (2) a central tubular member 4133c that defines a central opening (not labeled) and two opposing puck receiving openings (not labeled) in and that extend to the central opening; and (3) a spring clip 4500.

In this example the lower member 4133b is not internally threaded to enable the threaded rod R to be inserted through the lower member 4133b and into engagements with the pucks 4300 and 4350. The upper member 4133a enables the threaded rod R to be further connected to the threaded rod receiver 4132 for adjustment purposes. The threads can be of the same or compatible thread tolerances or can be of different (such as wider) thread tolerances when compared to the example threaded rod R.

The two locking pucks 4300 and 4350 are identical in this example embodiment, and thus only locking puck 4300 is described herein for brevity. The locking puck 4300 includes an inner threaded section (not labeled) and outer spring engagement section (not labeled). The inner threaded section is configured to engage and secure the threaded rod R. The outer spring engagement section is configured to be engaged by the spring clip 4500.

The spring clip 4500 includes a substantially cylindrical body 4510 having two puck engagement tabs 4530 and 4540. The spring clip 4500 is configured to be positioned around the housing and in engagement with the locking pucks 4300 and 4350. The spring clip 4500 is configured apply radially inward biasing of the locking pucks 4300 and 4350 to cause the locking pucks 4300 and 4350 to securely engage the threaded rod R, and in a manner that allows slight outward movement of the locking pucks 4300 and 4350 when the threaded rod is inserted into the housing. The spring clip 4500 is made from steel but can be made from other suitable materials.

The locking pucks 4300 and 4350, and the spring clip 4500 are thus configured to: (a) receive a threaded rod such as threaded rod R via an upward insertion (such as upward pushing) of the threaded rod R through the opening (not labeled) in the bottom end (not labeled) of the housing 4133b; (b) thereafter, secure the threaded rod R in the housing via engagement of the locking pucks 4300 and 4350 with the threaded rod R wherein the locking pucks are radially inwardly biased by the spring clip 4500; and (c) thereafter, enable adjustment of the height of the threaded rod R via rotation of the threaded rod R relative to the locking pucks 4300 and 4350, and the spring clip 4500.

The downward force of the threaded rod R creates an inward force on and inward movement of both of the locking pucks 4300 and 4350, further magnifying the inward spring force causes the locking pucks 4300 and 4350 to engage with the threaded rod R. It should be appreciated that in certain embodiments only one locking puck may be implemented.

The jam nut 4146 is sized for engagement by a 9/16 socket (and thus has an outer width which is 0.650 inches from point to point and 0.5625 inches from side to side). The jam nut 4146 includes an inner engagement surface 4147 that in this example includes longitudinally extending spaced apart ridges that are configured to cause an enhanced engagement with the bottom surface of the second bottom arm 4136.

The cylindrical head 4144 is slightly smaller than outer larger outer width of the jam nut 4146.

Thus, the jam nut 4146 thus has a slightly larger outer width than the cylindrical head 4144 of the set screw 4140.

The head 4144 thus has an outer width that is smaller than the outer width of the jam nut 4146 such that a 9/16 socket can be positioned over the head 4144 of the set screw 4140 and onto the jam nut 3146 and engage the jam nut 4146 as further described below.

In various embodiments, the jam nut 4146 is tightened to set screw 4140 and particularly against the head 4144 of the set screw 4140 with 5.5 - 6 ft. lbs. of torque. In various embodiments, this frictional engagement is created during the manufacturing process.

The installation procedure for this threaded rod hanger 4120 includes the following steps for the installer: (1) attaching the threaded rod R to the threaded rod receiver 4132; (2) attaching a 9/16 socket S (with an extended handle and an electric impact driver which is not shown) over the cylindrical head 4144 over the set screw 4140 and into engagement with the jam nut 4144; (3) positioning the threaded rod hanger 4120 relative to the member M of a beam B such that the first top arm 4134 is above the member M of the beam B and the second bottom arm 4136 is below the member M of the beam B; and (4) causing the electric impact driver connected to the 9/16 socket to torque the jam nut 4146 which rotates the jam nut 4146, and which transmits a portion of the on-torque up to 5 ft. lbs. of torque to head 4144 of the set screw 4140 and also causes the head 4144 and the set screw 4140 to rotate relative to the second bottom arm 4146.

The present disclosure contemplates that in various embodiments the set screw 4140 will tighten onto the member M of the beam B until approximately 5 ft-lb of torque is applied, at which time the jam nut 4146 will then loosen from being frictionally engaged with and adjacent to the head 4144 of the set screw 4140 and will continue to be driven by the electric impact driver until the jam nut 4146 tightens to the second bottom arm 4136 completing the installation process. In other words, the rotation jam nut 4146 will cause the set screw 4140 to sufficiently engage with a controlled installation torque the bottom surface of the member M of the beam B and also cause the jam nut 4146 sufficiently engage the bottom arm 4136. Thus, the manufacturer-applied torque between the jam nut 4146 and set screw 4140 controls (and can limit) the actual amount of torque applied to the set screw 4140 during field installation (and thus the amount of clamp load at which the free end (not labeled) of set screw 4140 engages the bottom surface of the member M of the beam B) because after the jam nut 4146 disengages from the head 4144 of the set screw 4140, no further torque is applied (or needs to be applied) to the set screw 4140. In other words, the amount of on-torque between the jam nut 4146 and the head 4144 of the set screw 4140 applied by the manufacturer of the threaded rod hanger 4120 controls (and can limit) the amount of actual torque applied to the set screw 4140 and thus the amount of clamp load at which the free end (not pictured) of set screw 4140 engages the beam in the field during the installation process.

It should additionally be appreciated that the threaded rod hanger 4120 can include on or more feature that provide for additional engagement(s) with the beam and/or the member of the beam. In the example threaded rod hanger 4120, the connector 4130 includes outwardly extending wings (not labeled) that are configured to engage the member of the beam when the threaded rod hanger is installed on the member of the beam. These wings function to widen the surface of the threaded rod hanger that engages the member of the beam to minimize rotation of the threaded rod hanger relative to the beam during the installation process and thereafter. It should be appreciated that the threaded rod hanger can include other suitable engagers such as teeth (not shown) to engage the beam.

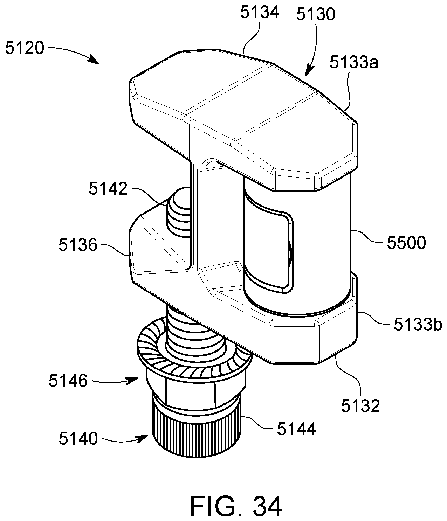

Figure 34 illustrates a threaded rod hanger 5120 of another example embodiment of the present disclosure. In this example embodiment, the threaded rod hanger 5120 is a controlled torque installed threaded rod hanger, wherein the amount of torque is set during the manufacturing process.

This threaded rod hanger 5120 includes: (1) a connector 5130 that includes: (a) a threaded rod receiver 5132, (b) a first top arm 5134 connected to and extending from the threaded rod receiver 5132, and (c) a second bottom arm 5136 connected to and extending from the threaded rod receiver 5132; (2) a set screw 5140 connected to the second arm 5136; and (3) a jam nut 5146 threadedly mounted on the set screw 5140.

The set screw 5140 includes a threaded shaft 5142 and a cylindrical head 5144 fixedly connected to the threaded shaft 5142.

The second (bottom) arm 5136 includes an inner threaded opening (not shown) configured to threadedly receive the threaded shaft 5142 of the set screw 5140.

The jam nut 5146 is threadedly mounted on the shaft 5142 at a position adjacent to, in substantial frictional engagement with the head 5144 such that rotation of the jam nut 5146 (when rotated) causes rotation of the head 5144 and thus the shaft 5142 of the set screw 5140.

The jam nut 5146 is only rotatable with respect to the shaft 5142 (as described below) after being disengaged from the cylindrical head 5144 of the set screw 5140.

The threaded rod receiver 5132 includes a housing formed from an upper member 5133a and a lower member 5133b. The upper member 5133a does not include an opening for the threaded rod to continue to be adjusted upward or allow for any upward movement after initial insertion into threaded rod receiver 5132.

The threaded rod hanger 5120 can include one or more locking pucks (not shown); (2) a central tubular member (not shown); and (3) a spring clip 5500.

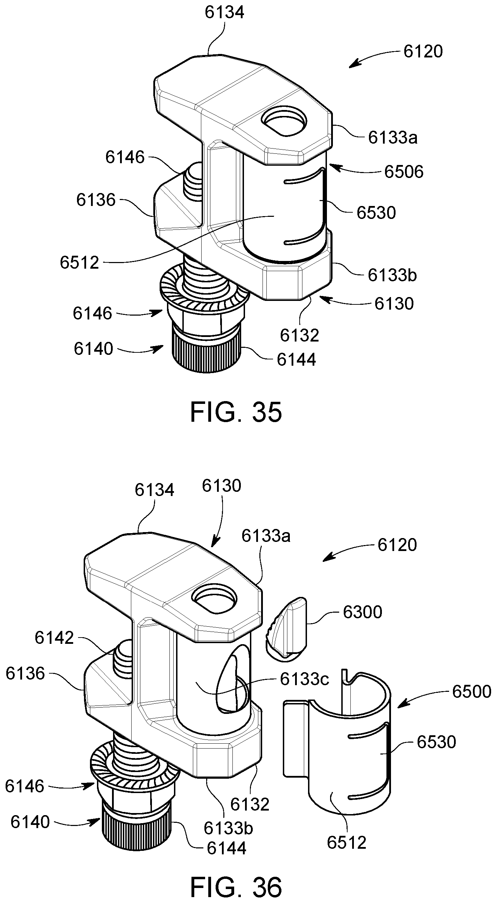

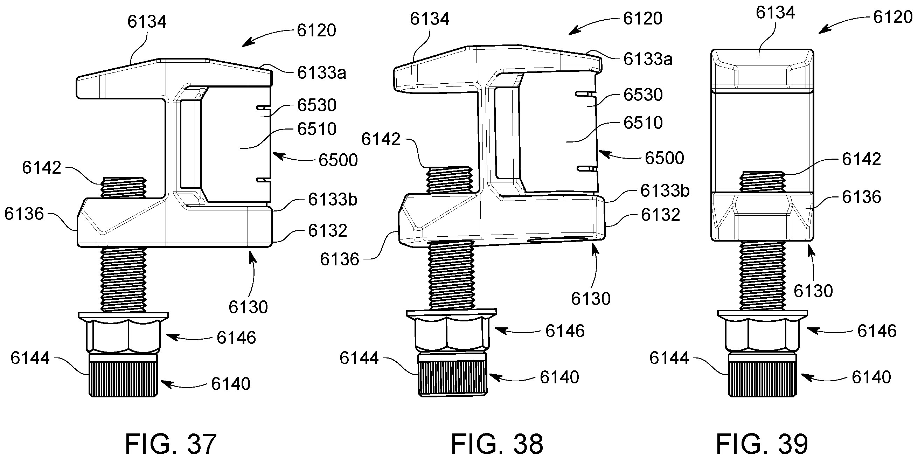

Figures 35, 36, 37, 38, 39, 40, and 41 illustrate a threaded rod hanger 6120 of another example embodiment of the present disclosure. In this example embodiment, the threaded rod hanger 6120 is a controlled torque installed threaded rod hanger, wherein the amount of torque is set during the controlled manufacturing process for the threaded rod hanger 6120 such as described below.

This threaded rod hanger 6120 includes: (1) a connector 6130 that includes: (a) a threaded rod receiver 6132, (b) a first top arm 6134 connected to and extending from the threaded rod receiver 6132, and (c) a second bottom arm 6136 connected to and extending from the threaded rod receiver 6132; (2) a set screw 6140 connected to the second arm 6136; and (3) a jam nut 6146 threadedly mounted on the set screw 6140.

The set screw 6140 includes a threaded shaft 6142 and a cylindrical head 6144 fixedly connected to the threaded shaft 6142.

The second (bottom) arm 6136 includes an inner threaded opening (not shown) configured to threadedly receive the threaded shaft 6142 of the set screw 6140.

The jam nut 6146 is threadedly mounted on the shaft 6142 at a position adjacent to, in substantial frictional engagement with the head 6144 such that rotation of the jam nut 6146 (when rotated) causes rotation of the head 6144 and thus the shaft 6142 of the set screw 6140. The jam nut 6146 is only rotatable with respect to the shaft 6142 (as described below) after being disengaged from the cylindrical head 6144 of the set screw 6140.

In this example embodiment, the threaded rod receiver 6132 includes two sections for receiving the threaded rod R. More specifically, the threaded rod receiver 6132 includes a housing formed from an internally threaded upper member 6133a and a non-threaded lower member 6133b.

The threaded rod hanger 6120 includes; (1) a single internally threaded locking puck 6300; (2) a central tubular member 6133c that defines a central opening (not labeled) and a puck receiving opening (not labeled) in and that extends to the central opening; and (3) a spring clip 6500.

In this example the lower member 6133b is not internally threaded to enable the threaded rod R to be inserted through the lower member 6133b and into engagement with the puck 6300. The upper member 6133a enables the threaded rod R to be further connected to the threaded rod receiver 6132 for upward adjustment purposes. The threads can be of the same or compatible thread tolerances or can be of different (such as wider) thread tolerances.

The locking puck 6300 includes an inner threaded section (not labeled) and outer spring engagement section (not labeled). The inner threaded section is configured to engage and secure the threaded rod R. The outer spring engagement section is configured to be engaged by the spring clip 6500.

The spring clip 6500 includes a substantially cylindrical body 6510 having a single engagement tab 6530. The spring clip 6500 is configured to be positioned around the central tubular member 6133c and in engagement with the locking puck 6300. The spring clip 6500 is configured to apply radially inward biasing of the locking puck 6300 to cause the locking puck 6300 to securely engage the threaded rod R, and in a manner that allows slight outward movement of the locking puck 6300 when the threaded rod is inserted into the threaded rod hanger 6120. The spring clip 6500 is made from steel but can be made from other suitable materials.

The locking puck 6300 and the spring clip 6500 are thus configured to: (a) receive a threaded rod such as threaded rod R via an upward insertion (such as upward pushing) of the threaded rod R through the opening (not labeled) in the bottom section 6133b; (b) thereafter, secure the threaded rod R in the housing via engagement of the locking puck 6300 with the threaded rod R wherein the locking puck is radially inwardly biased by the spring clip 6500; and (c) thereafter enable adjustment of the height of the threaded rod R via rotation of the threaded rod R relative to the locking puck 6300 and the spring clip 6500.

The downward force of the threaded rod R creates an inward force on and inward movement of both of the locking puck 6300, further magnifying the inward spring force causes the locking puck 6300 to engage with the threaded rod R.

The jam nut 6146 is sized for engagement by a 9/16 socket (and thus has an outer width which is 0.650 inches from point to point and 0.5625 inches from side to side). The jam nut 6146 includes an inner engagement surface 6147 that in this example includes longitudinally extending spaced apart ridges that are configured to cause an enhanced engagement with the bottom surface of the second bottom arm 6136.

The cylindrical head 6144 is slightly smaller than outer larger outer width of the jam nut 6146.

Thus, the jam nut 6146 thus has a slightly larger outer width than the cylindrical head 6144 of the set screw 6140.

The head 6144 thus has an outer width that is smaller than the outer width of the jam nut 6146 such that a 9/16 socket can be positioned over the head 6144 of the set screw 6140 and onto the jam nut 6146 and engage the jam nut 6146 as further described below.

In various embodiments, the jam nut 6146 is tightened to the set screw 6140 and particularly against the head 6144 of the set screw 6140 with 5.5 - 6 ft. lbs. of torque. In various embodiments, this frictional engagement is created during the manufacturing process.

The installation procedure for this threaded rod hanger 6120 includes the following steps for the installer: (1) attaching the threaded rod R to the threaded rod receiver 6132; (2) attaching a 9/16 socket S (with an extended handle and an electric impact driver which is not shown) over the cylindrical head 6144 over the set screw 6140 and into engagement with the jam nut 6144; (3) positioning the threaded rod hanger 6120 relative to the member M of a beam B such that the first top arm 6134 is above the member M of the beam B and the second bottom arm 6136 is below the member M of the beam B; and (4) causing the electric impact driver connected to the 9/16 socket to torque the jam nut 6146 which rotates the jam nut 6146, and which transmits a portion of the on-torque up to 5 ft. lbs. of torque to head 6144 of the set screw 6140 and also causes the head 6144 and the set screw 6140 to rotate relative to the second bottom arm 6146.

The present disclosure contemplates that in various embodiments the set screw 6140 will tighten onto the member M of the beam B until approximately 5 ft-lb of torque is applied, at which time the jam nut 6146 will then loosen from being frictionally engaged with and adjacent to the head 144 of the set screw 6140 and will continue to be driven by the electric impact driver until the jam nut 6146 tightens to the second bottom arm 6136 completing the installation process. In other words, the rotation jam nut 6146 will cause the set screw 6140 to sufficiently engage with a controlled installation torque the bottom surface of the member M of the beam B and also cause the jam nut 6146 sufficiently engage the bottom arm 6136. Thus, the manufacturer-applied torque between the jam nut 6146 and set screw 6140 controls (and can limit) the actual amount of torque applied to the set screw 6140 during field installation (and thus the amount of clamp load at which the free end (not labeled) of set screw 6140 engages the bottom surface of the member M of the beam B) because after the jam nut 6146 disengages from the head 6144 of the set screw 6140, no further torque is applied (or needs to be applied) to the set screw 6140. In other words, the amount of on-torque between the jam nut 6146 and the head 6144 of the set screw 6140 applied by the manufacturer of the threaded rod hanger 6120 controls (and can limit) the amount of actual torque applied to the set screw 6140 and thus the amount of clamp load at which the free end (not pictured) of set screw 6140 engages the beam in the field during the installation process.

It should additionally be appreciated that the threaded rod hanger 6120 can include on or more feature that provide for additional engagement(s) with the beam and/or the member of the beam. In the example threaded rod hanger 6120, the connector 6130 includes outwardly extending wings (not labeled) that are configured to engage the member of the beam when the threaded rod hanger is installed on the member of the beam. These wings function to widen the surface of the threaded rod hanger that engages the member of the beam to minimize rotation of the threaded rod hanger relative to the beam during the installation process and thereafter. It should be appreciated that the threaded rod hanger can include other suitable engagers such as teeth (not shown) to engage the beam.

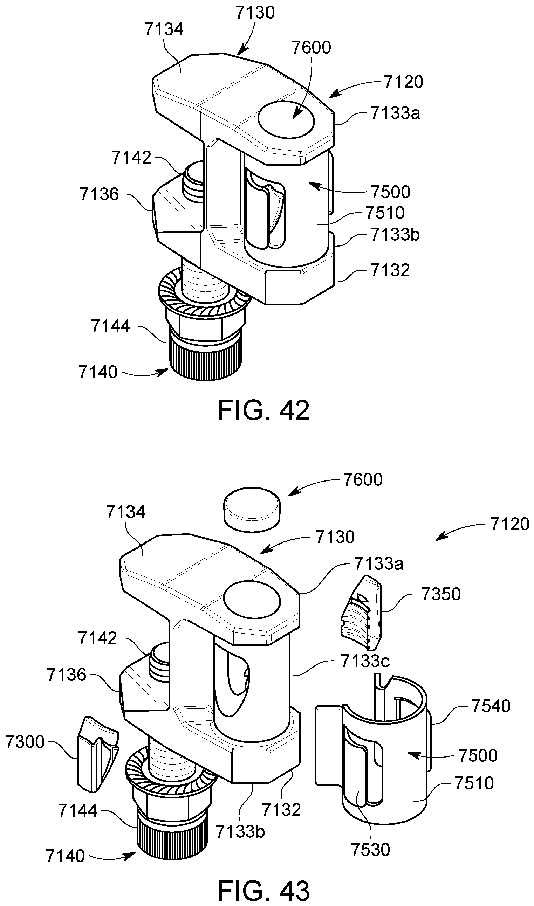

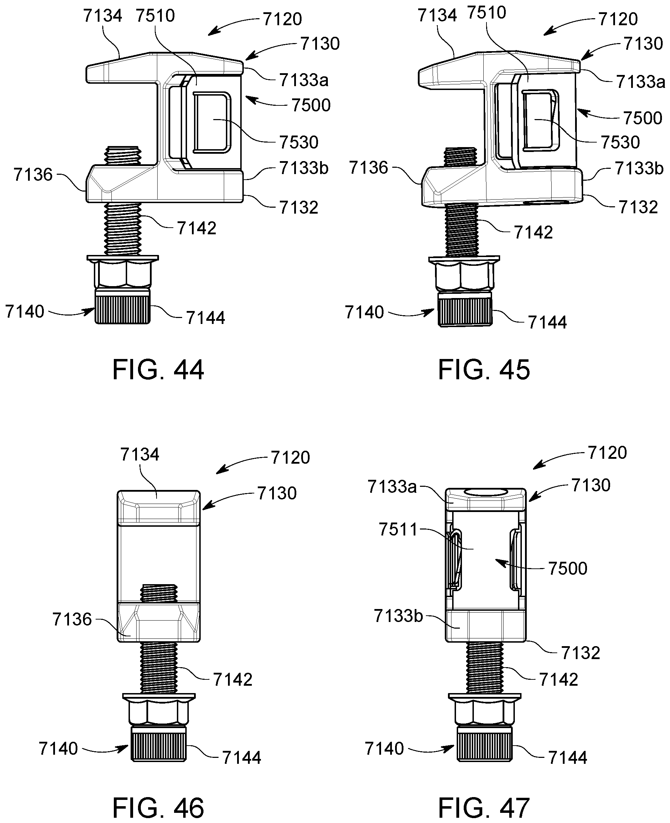

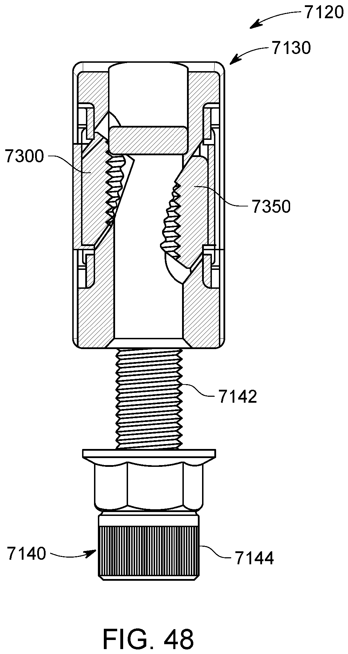

Figures 42, 43, 44, 45, 46, 47, and 48 illustrate a threaded rod hanger 7120 of another example embodiment of the present disclosure. In this example embodiment, the threaded rod hanger 7120 is a controlled torque installed threaded rod hanger, wherein the amount of torque is set during the controlled manufacturing process such as described below.

This threaded rod hanger 7120 includes: (1) a connector 7130 that includes: (a) a threaded rod receiver 7132, (b) a first top arm 7134 connected to and extending from the threaded rod receiver 7132, and (c) a second bottom arm 7136 connected to and extending from the threaded rod receiver 7132; (2) a set screw 7140 connected to the second arm 7136; and (3) a jam nut 7146 threadedly mounted on the set screw 7140.

The set screw 7140 includes a threaded shaft 7142 and a cylindrical head 7144 fixedly connected to the threaded shaft 7142.

The second (bottom) arm 7136 includes an inner threaded opening (not shown) configured to threadedly receive the threaded shaft 7142 of the set screw 7140.

The jam nut 7146 is threadedly mounted on the shaft 7142 at a position adjacent to and in substantial frictional engagement with the head 7144 such that rotation of the jam nut 7146 (when rotated) causes rotation of the head 7144 and thus the shaft 7142 of the set screw 7140. The jam nut 7146 is only rotatable with respect to the shaft 7142 (as described below) after being disengaged from the cylindrical head 7144 of the set screw 7140.

In this example embodiment, the threaded rod receiver 7132 includes two sections for receiving the threaded rod R. More specifically, the threaded rod receiver 7132 includes a housing formed from a non-threaded upper member 7133a and a non-threaded lower member 7133b. The threads can be of the same or compatible thread tolerances or can be of different (such as wider) thread tolerances.

The threaded rod hanger 7120 also includes: (1) two separate and independent internally threaded locking pucks 7300 and 7350; (2) a central tubular member 7133c that defines a central opening (not labeled) and two opposing puck receiving openings (not labeled) in and that extend to the central opening; (3) a spring clip 3500; and(4) a cylindrical plug 7600 that is connected to non-threaded upper member 7133a.

The two locking pucks 7300 and 7350 are identical in this example embodiment, but are positioned in opposing directions to enable adjustment of the threaded rod R in the upward direction and in the downward direction after insertion of the threaded rod R only by rotating threaded rod R clockwise or counter-clockwise, and otherwise securing the threaded rod R from movement in either direction.

The locking puck 7300 includes an inner threaded section (not labeled) and outer spring engagement section (not labeled). The inner threaded section is configured to engage and secure the threaded rod R. The outer spring engagement section is configured to be engaged by the spring clip 7500.

The locking puck 7350 includes an inner threaded section (not labeled) and outer spring engagement section (not labeled). The inner threaded section is configured to engage and secure the threaded rod R. The outer spring engagement section is configured to be engaged by the spring clip 7500. Puck 7350 is orientated to allow position adjustment of the threaded rod only by rotating the threaded rod and prevents down movement of the threaded rod due to loading as further described below. The locking puck 7300 includes an inner threaded section (not labeled) and outer spring engagement section (not labeled). The inner threaded section is configured to engage and secure the threaded rod R. The outer spring engagement section is configured to be engaged by the spring clip 7500. Puck 7300 is orientated to allow position adjustment of the threaded rod only by rotating the threaded rod and prevents upward movement of the threaded rod due to loading as further described below.

The spring clip 7500 includes a substantially cylindrical body 7510 having two puck engagement tabs 7530 and 7540. The spring clip 7500 is configured to be positioned around the central tubular member 7133c and in engagement with the locking pucks 7300 and 7350. The spring clip 7500 is configured to apply radially inward biasing of the locking pucks 7300 and 7350 to cause the locking pucks 7300 and 7350 to securely engage the threaded rod R, and in a manner that allows slight outward movement of the locking puck 7350 when the threaded rod is inserted into the housing. The spring clip 7500 is made from steel but can be made from other suitable materials.

The locking pucks 7300 and 7350, and the spring clip 7500 are thus configured to: (a) receive a threaded rod such as threaded rod R via an upward insertion (such as upward pushing) of the threaded rod R through the opening (not labeled) in the bottom end (not labeled) of the housing 7133b; (b) thereafter, secure the threaded rod R in the housing via engagement of the locking pucks 7300 and 7350 with the threaded rod R wherein the locking pucks are radially inwardly biased by the spring clip 7500; and (c) thereafter enable adjustment of the height of the threaded rod R via rotation of the threaded rod R relative to the locking pucks 7300 and 7350, and the spring clip 7500.

The downward force of the threaded rod R creates an inward force on and inward movement of the locking puck 7350, further magnifying the inward spring force causes the locking puck 7350 to engage with the threaded rod R. An upward force of the threaded rod R creates an inward force on and inward movement of the locking puck 7300, further magnifying the inward spring force causes the locking puck 7300 to engage with the threaded rod R.

This example threaded rod hanger 7120 includes a removable plug 7600 configured to position locking puck 7300 in an open position to allow threaded rod R to be received by threaded rod receiver 7132 until such time that threaded rod R disengages plug 7600 thereby allowing the threaded side of puck 7300 to engage threaded rod R allowing for adjustment by rotating the threaded rod R but preventing upward mobility of threaded rod R due to upward loading. The plug 7600 can be removed after the threaded rod R is inserted.

The jam nut 7146 is sized for engagement by a 9/16 socket (and thus has an outer width that is 0.650 inches from point to point and 0.5625 inches from side to side). The jam nut 7146 includes an inner engagement surface 7147 that in this example includes longitudinally extending spaced apart ridges that are configured to cause an enhanced engagement with the bottom surface of the second bottom arm 7136.

The cylindrical head 7144 is slightly smaller than outer larger outer width of the jam nut 7146.

Thus, the jam nut 7146 thus has a slightly larger outer width than the cylindrical head 7144 of the set screw 7140.

The head 7144 has an outer width that is smaller than the outer width of the jam nut 7146 such that a 9/16 socket can be positioned over the head 7144 of the set screw 7140 and onto the jam nut 7146 and engage the jam nut 7146 as further described below.

In various embodiments, the jam nut 7146 is tightened to set screw 7140 and particularly against the head 7144 of the set screw 7140 with 5.5 - 6 ft. lbs. of torque. In various embodiments, this frictional engagement is created during the manufacturing process.

The installation procedure for this threaded rod hanger 7120 includes the following steps for the installer: (1) attaching the threaded rod R to the threaded rod receiver 7132; (2) attaching a 9/16 socket S (with an extended handle and an electric impact driver which is not shown) over the cylindrical head 7144 over the set screw 7140 and into engagement with the jam nut 7144; (3) positioning the threaded rod hanger 7120 relative to the member M of a beam B such that the first top arm 7134 is above the member M of the beam B and the second bottom arm 7136 is below the member M of the beam B; and (4) causing the electric impact driver connected to the 9/16 socket to torque the jam nut 7146 which rotates the jam nut 7146, and which transmits a portion of the on-torque up to 5 ft. lbs. of torque to head 7144 of the set screw 7140 and also causes the head 7144 and the set screw 7140 to rotate relative to the second bottom arm 7146.

The present disclosure contemplates that in various embodiments the set screw 7140 will tighten onto the member M of the beam B until approximately 5 ft-lb of torque is applied, at which time the jam nut 1746 will then loosen from being frictionally engaged with and adjacent to the head 7144 of the set screw 7140 and will continue to be driven by the electric impact driver until the jam nut 7146 tightens to the second bottom arm 7136 completing the installation process. In other words, the rotation jam nut 7146 will cause the set screw 7140 to sufficiently engage with a controlled installation torque the bottom surface of the member M of the beam B and also cause the jam nut 7146 sufficiently engage the bottom arm 7136. Thus, the manufacturer-applied torque between the jam nut 7146 and set screw 7140 controls (and can limit) the actual amount of torque applied to the set screw 7140 during field installation (and thus the amount of clamp load at which the free end (not labeled) of set screw 7140 engages the bottom surface of the member M of the beam B) because after the jam nut 146 disengages from the head 7144 of the set screw 140, no further torque is applied (or needs to be applied) to the set screw 7140. In other words, the amount of on-torque between the jam nut 7146 and the head 7144 of the set screw 7140 applied by the manufacturer of the threaded rod hanger 7120 controls (and can limit) the amount of actual torque applied to the set screw 7140 and thus the amount of clamp load at which the free end (not pictured) of set screw 7140 engages the beam in the field during the installation process.

It should additionally be appreciated that the threaded rod hanger can include on or more feature that provide for additional engagement(s) with the beam and/or the member of the beam. In the example threaded rod hanger 7120, the connector 7130 includes outwardly extending wings (not labeled) that are configured to engage the member of the beam when the threaded rod hanger is installed on the member of the beam. These wings function to widen the surface of the threaded rod hanger that engages the member of the beam to minimize rotation of the threaded rod hanger relative to the beam during the installation process and thereafter. It should be appreciated that the threaded rod hanger can include other suitable engagers such as teeth (not shown) to engage the beam.

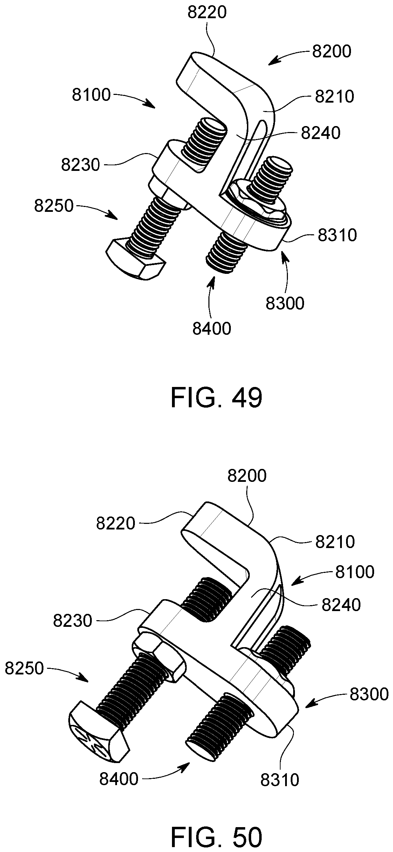

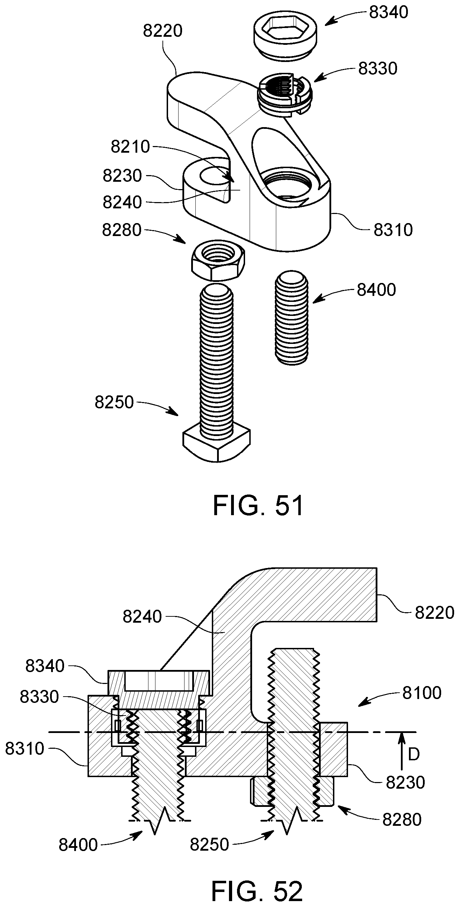

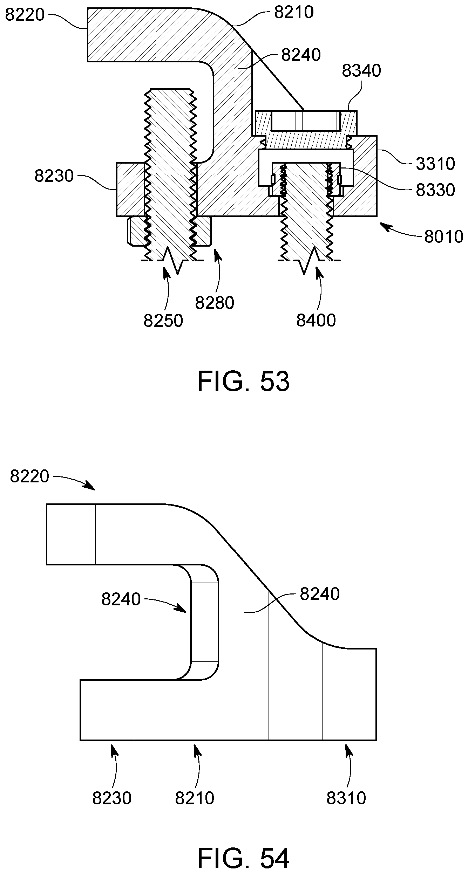

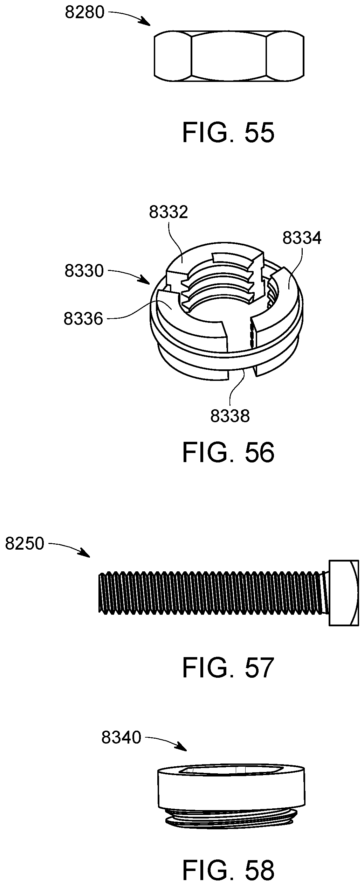

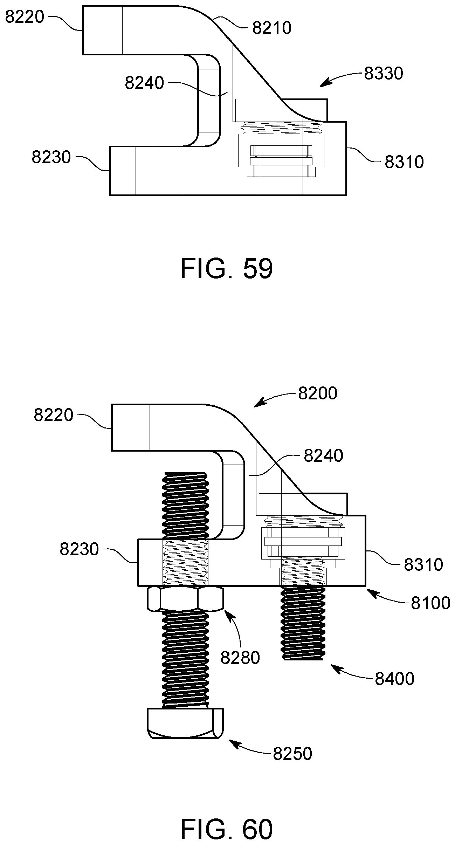

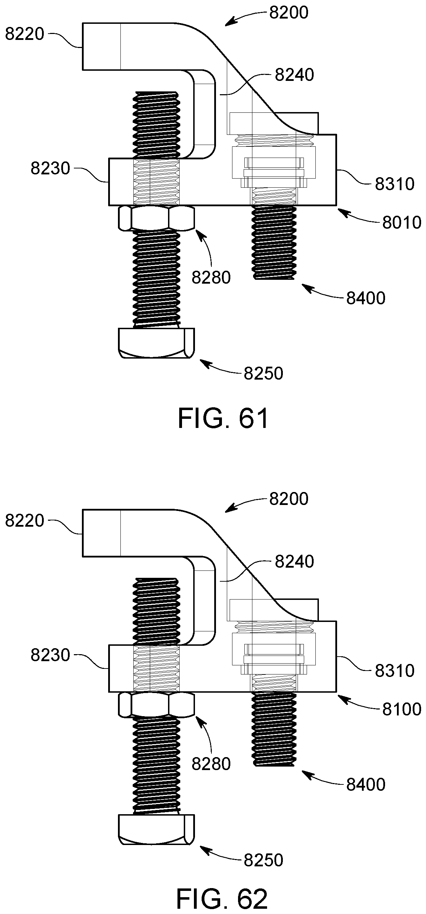

Figures 49 to 62 illustrate a threaded rod hanger 8010 of another example embodiment of the present disclosure, wherein the threaded rod hanger 8010 is configured to facilitate hanging a threaded rod to a ceiling structure or other overhead structure, and wherein the threaded rod hanger 8010 is quickly and easily attachable to an overhead structure and enables a threaded rod to be quickly and easily attached to the threaded rod hanger.

The threaded rod hanger 8100 generally includes: (1) a connector 8200; and (2) a threaded rod receiver 8300.

The connector 8200 includes: (1) a connector body 8210; (2) a fastener 8250; and (3) a fastener securer 8280. The fastener 8250 and the fastener securer 8280 can be configured as shown or as in any of the forms described above.

The connector body 8210 includes: (a) an upper arm 8220; (b) a lower arm 8230; and (c) an arm connector 8240. These components can be configured as shown or as in any of the forms described above.

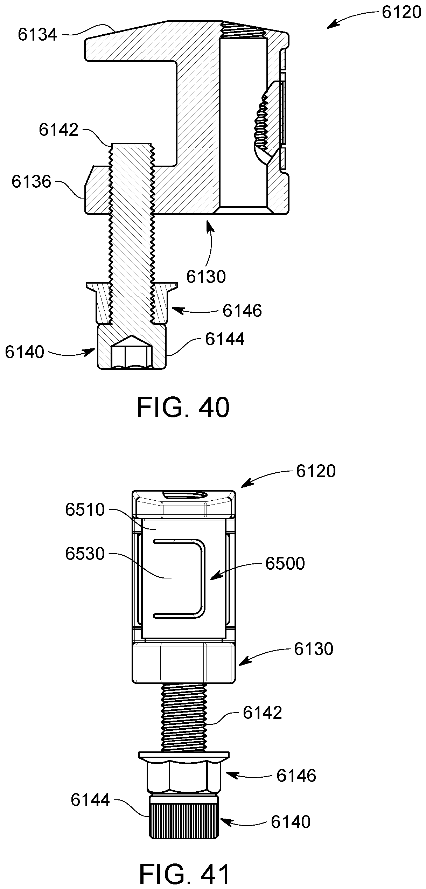

The connector 8200 is configured to be attached to an overhead structure (not shown) in Figure 40 to 62.

The threaded rod receiver 8300 includes: (1) a receiver body 8310; (2) an expandable nut assembly 8330; and (3) a locking cap 8340. The threaded rod receiver 8300 is configured to receive and securely hold a threaded rod such as threaded rod 8400.

More specifically, the connector body 8210 includes inner threads (not labeled) configured to mate with the outer threads (not labeled) of the locking cap 8340. In this example embodiment, the connector body 8210 and the receiver body 8310 are a single monolithically formed member. In other example embodiments, the connector body 8210 and the receiver body 8310 can be made separate members and suitably attached to each other.

The expandable nut assembly 8330 includes three separate locking pucks 8332, 8334, and 8336 and a spring clip 8338 positioned around the locking pucks 8332, 8334, and 8336. The locking pucks 8332, 8334, and 8336 are each curved and each include inner threads (not labeled) configured to collectively engage the outer threads of the threaded rod 8400. The locking pucks 8332, 8334, and 8336 also each define a curved outer spring clip receiving groove (not labeled) configured to receive part of the spring clip 8338.

The locking cap 8340 is engagable by a tool and is configured to hold the expandable nut assembly 8330 in the connector body 8210 such that the expandable nut assembly 8330 is configured to: (a) receive threaded rod 8400 via an upward insertion (such as upward pushing) of the threaded rod 8400 through the expandable nut assembly 8330, (b) thereafter, secure the threaded rod 8400 in the expandable nut assembly 8330 via a downward movement (such as downward pulling) of the threaded rod 8400 the expandable nut assembly 8330; and (c) thereafter enable adjustment of the height of the threaded rod 8400 in the expandable nut assembly 8330 via rotation of the threaded rod 8400 relative to the expandable nut assembly 8330.

It should be appreciated that these components can be made from any suitable materials in accordance with the present disclosure.

It should be appreciated that certain advantages of this threaded rod hanger 8100 include but are not limited to: (1) enabling a threaded rod to be quickly and easily attached to the threaded rod hanger; and (2) enabling threaded rod with burrs or damaged threads to be used.

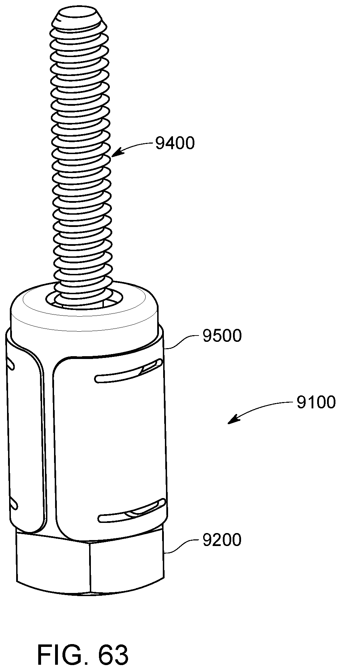

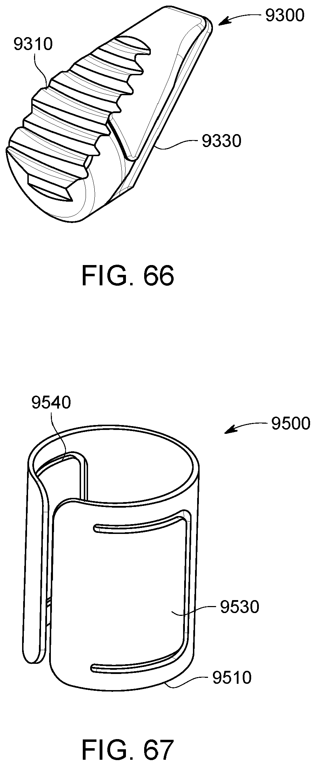

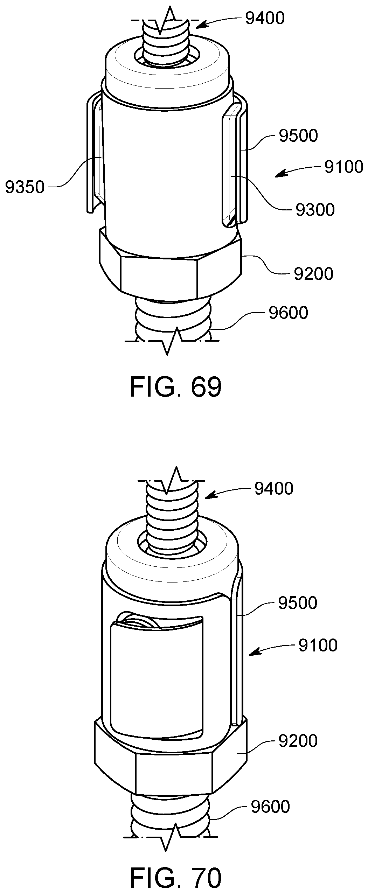

Figures 63 to 72 illustrate a threaded rod hanger 9100 of another example embodiment of the present disclosure, wherein the threaded rod hanger 9100 is configured to facilitate hanging a threaded rod to an overhead structure, wherein the threaded rod hanger 9100 is quickly and easily attachable to an overhead structure, and wherein a threaded rod can be quickly and easily attached to the threaded rod hanger 9100.

The illustrated example threaded rod hanger 9100 generally includes: (1) a housing 9200; (2) two separate and independent locking pucks 9300 and 9350; (3) an attachment fastener 9400; and (4) a spring clip 9500. It should be appreciated that in alternate embodiments fewer or more locking pucks may be implemented.

The attachment fastener 9400 includes a head 9420 and a threaded shaft 9450 connected to and extending from the head 9420. The threaded shaft 9450 is configured to extend from the housing 9200 when the threaded rod hanger 9100 is assembled such as shown in Figures 63, 68A, 68B, 68C, 69, and 70.

More specifically, the housing 9200 includes a fastener attachment section 9220, a locking puck receiving section 9250, and a tool engagement section 9280. These sections are integrally formed in this example embodiment. The housing 9200 is made from a ferrous metal in this example but can be made from other suitable materials.

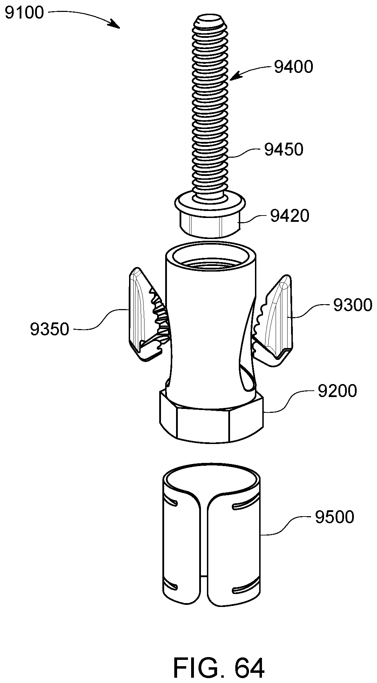

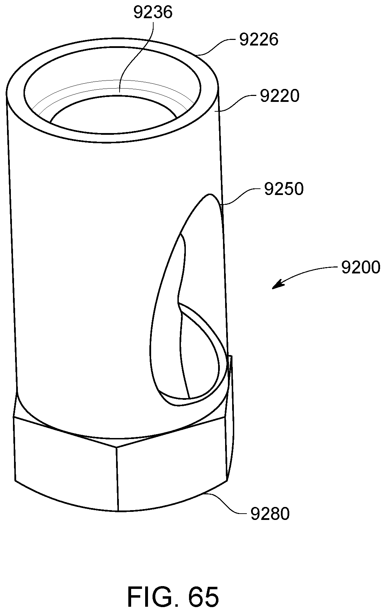

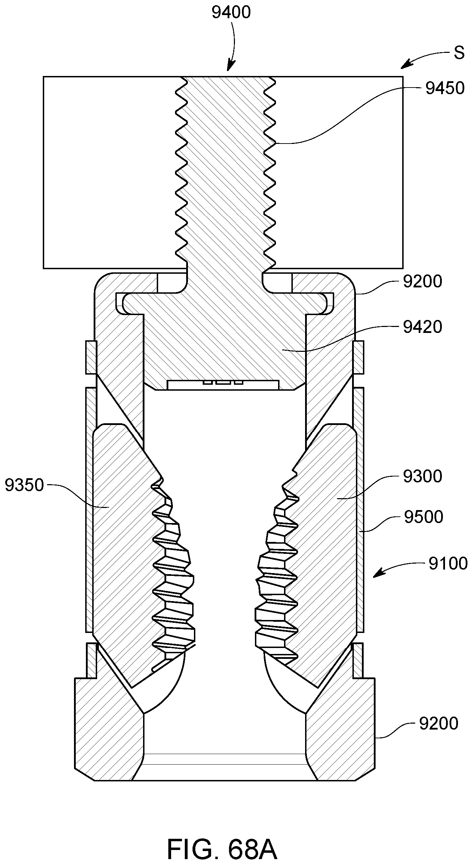

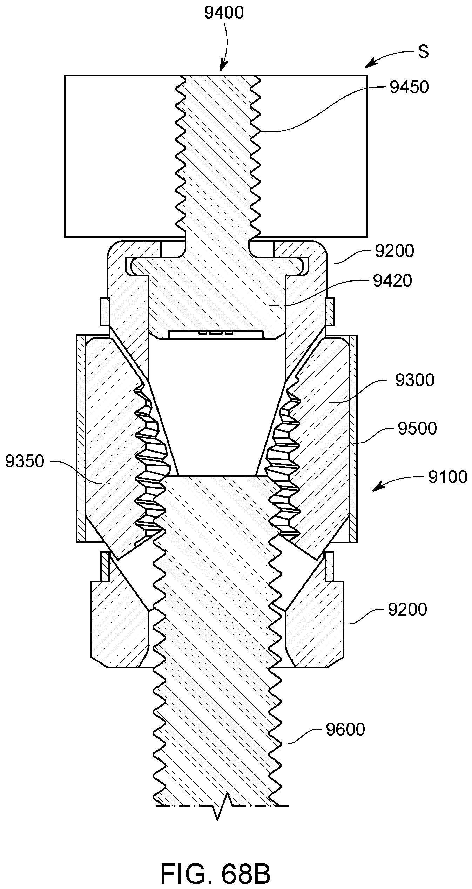

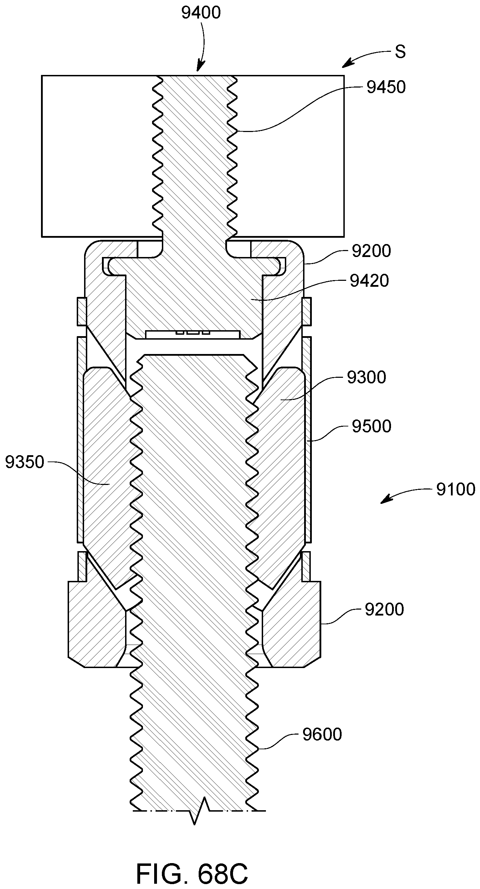

The fastener attachment section 9220 of the housing 9200 includes an outer cylindrical fastener locking wall 9226 and an inner fastener supporting ledge 9236. Prior to assembly of the threaded rod hanger 9100, the outer cylindrical fastener locking wall 9226 extends longitudinally (such as vertically) as shown in Figures 64 and 65. During assembly of the threaded rod hanger 9100, the head 9420 of the attachment fastener 9400 is inserted into the outer cylindrical fastener locking wall 9226 and into engagement with the inner fastener supporting ledge 9236. The outer cylindrical fastener locking wall 9226 is then bent or folded inwardly as shown in Figures 63, 68A, 68B, 68C, 69, and 70 to secure the head 9420 of the attachment fastener 9400 in the fastener attachment section 9200 as best shown in Figures 68A, 68B, and 68C. Thus, during assembly, the attachment fastener 9400 is securely attached to the housing 9200 such that when the housing 9200 is rotated, the attachment fastener 9400 rotates. This facilitates connection of the threaded rod hanger 9100 to an overhead structure (not shown). It should be appreciated that the relative dimensions and tolerances of these components are configured to facilitate the secure connection between these components. It should be appreciated that other methods of connecting attachment fastener 9400 to housing 9200 such as welding or adhesive can be employed. It should also be appreciated that attachment fastener 9400 and housing 9200 can be formed as one monolithic piece such as by molding, forging, or machining operations.

The locking puck receiving section 9250 of the housing 9200 defines two locking puck receiving openings (not labeled) that are respectively configured to receive the locking pucks 9300 and 9350 such as shown in Figures 64, 68A, 68B, and 68C.

The tool engagement section 9280 of the housing 9200 is configured to be engaged by a tool (such as a socket wrench or ratchet) to cause the housing 9200, the attachment fastener 9400 securely connected to the housing 9200, and thus the entire threaded rod hanger 9100 to be rotated (such as for installation purposes).

The two locking pucks 9300 and 9350 are identical in this example embodiment, and thus only locking puck 9300 is described herein for brevity. The locking puck 9300 includes an inner threaded section 9310 and outer spring engagement section 9330. The inner threaded section 9310 is configured to engage and secure the threaded rod 9600 in the housing 9200 such as shown in Figures 68B and 68C. The outer spring engagement section 9330 is configured to be engaged by the spring clip 9500 such as shown in Figures 63, 68A, 68B, 68C, 69, and 70. The two locking pucks 9300 and 9350 are made from steel but can be made from other suitable materials.

The spring clip 9500 includes a substantially cylindrical body 9510 having two puck engagement tabs 9530 and 9540. The spring clip 9500 is configured to be positioned around the housing 9200 and in engagement with the locking pucks 9300 and 9350. The spring clip 9500 is configured apply radially inward biasing of the locking pucks 9300 and 9350 to cause the locking puck 9300 and 3950 to securely engage the threaded rod 9600 as shown in Figure 68C, and in a manner that allows slight outward movement of the locking pucks 9300 and 9350 when the threaded rod is inserted into the housing 9200 as shown in Figure 68B. The spring clip 9500 is made from steel but can be made from other suitable materials.

The housing 9200, the locking pucks 9300 and 9350, and the spring clip 9500 are thus configured to: (a) receive a threaded rod such as threaded rod 9600 via an upward insertion (such as upward pushing) of the threaded rod 9600 through the opening (not labeled) in the bottom end (not labeled) of the housing 9200 (such as shown in Figures 68A and 68B); (b) thereafter, secure the threaded rod 9600 in the housing 9200 via engagement of the locking pucks 9300 and 9350 with the threaded rod 9600 wherein the locking pucks are radially inwardly biased by the spring clip 9500, such as shown in Figures 68C, 69, and 70; and (c) thereafter enable adjustment of the height of the threaded rod 9600 via rotation of the threaded rod 600 relative to the housing 9200, the locking pucks 9300 and 9350, and the spring clip 9500.

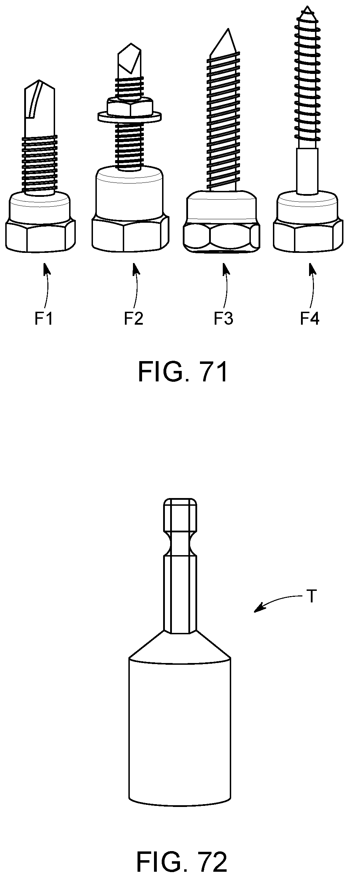

The attachment fastener 9400 is configured to be attached to an overhead structure such as structure S. Figure 71 shows different example attachment fasteners F1, F2, F3, and F4 that can each be part of the threaded rod hanger of the present disclosure and thus used to attach the threaded rod hanger to different overhead structures.

Figure 72 shows an example tool T that that can used to attach the threaded rod hanger 9100 of the present disclosure to an overhead structure. The tool T is configured to engage the tool engagement section 9280 of the housing 9200.

It should be appreciated that these components can be made from any suitable materials in accordance with the present disclosure.

It should be appreciated that certain advantages of this threaded rod hanger 9100 include but are not limited to: (1) enabling a threaded rod to be quickly and easily attached to the threaded rod hanger; and (2) enabling threaded rod with burrs or damaged threads to be used.

Various changes and modifications to the above-described embodiments described herein will be apparent to those skilled in the art. These changes and modifications can be made without departing from the spirit and scope of this present subject matter and without diminishing its intended advantages.

Certain embodiments of the invention are described in the following clauses:
Clause 1. A threaded rod hanger comprising:
   a set screw including a threaded shaft and a head fixedly connected to the threaded shaft;
   a connector including a threaded rod receiver, a first arm connected to and extending from the threaded rod receiver, and a second arm connected to and extending from the threaded rod receiver, the second arm including inner threads and defining an inner opening configured to threadedly receive the threaded shaft of the set screw; and
   a jam nut threadedly mounted on the shaft of the set screw at a position adjacent to and in substantial frictional engagement with the head of the set screw such that rotation of the jam nut causes rotation of the head and thus the shaft of the set screw, the jam nut is rotatable on the shaft of the set screw after being disengaged from the head of the set screw,
   wherein the head of the set screw has an outer width that is smaller than the outer width of the jam nut such that a tool can be positioned over the head of the set screw and onto the jam nut to engage the jam nut and rotate the jam nut.
Clause 2. The threaded rod hanger of Clause 1, wherein the head of the set screw is square.
Clause 3. The threaded rod hanger of Clause 1, wherein the head of the set screw is cylindrical.
Clause 4. The threaded rod hanger of Clause 1, wherein the head of the set screw is hexagonal.
Clause 5. The threaded rod hanger of Clause 1, wherein the head of the set screw includes an inner engagement member sized to receive to be engaged by a tool.
Clause 6. The threaded rod hanger of Clause 1, wherein the jam nut is sized to be engaged by a 9/16 socket.
Clause 7. The threaded rod hanger of Clause 1, wherein the jam nut is sized to be engaged by a 11/16 socket.
Clause 8. The threaded rod hanger of Clause 1, wherein the threaded rod received includes an upper inner threaded section and a lower non-inner threaded section.
Clause 9. The threaded rod hanger of Clause 1, which includes one or more pucks engageable with the threaded rod and a spring clamp engaging each said puck.
Clause 10. The threaded rod hanger of Clause 9, wherein the one or more pucks includes a first puck and a separate second puck each engageable with the threaded rod, and a spring clamp that engages the first and second pucks.
Clause 11. The threaded rod hanger of Clause 10, wherein the first and second pucks extend in a same directional position.
Clause 12. The threaded rod hanger of Clause 10, wherein the first and second pucks extend in opposite directional positions.
Clause 13. A threaded rod hanger comprising:
   a connector including a connector body, a fastener, and a fastener securer; and
   a threaded rod receiver including a receiver body and an expandable nut assembly including a spring clip radially positioned around pucks of the nut assembly and configured to bias the pucks radially inwardly.
Clause 14. The threaded rod hanger of Clause 13, wherein the receiver body is configured to receive the expandable nut assembly.
Clause 15. The threaded rod hanger of Clause 13, which includes a locking cap, wherein the receiver body is configured to receive the expandable nut assembly, and wherein the locking cap is configured to hold the expandable nut assembly in the receiver body.
Clause 16. The threaded rod hanger of Clause 15, wherein the expandable nut assembly includes two separate pucks each engageable with the threaded rod, and a spring clamp that engages the pucks.
Clause 17. The threaded rod hanger of Clause 13, wherein the expandable nut assembly includes a first puck and a separate second puck that are each engageable with the threaded rod, and a spring clamp that engages the first and second pucks.
Clause 18. A threaded rod hanger comprising:
   a housing that defines puck receiving openings;
   separate and independent locking pucks respectively positioned in the puck receiving openings, the locking pucks configured to engage a threaded rod;
   a spring clip positioned around the housing and in engagement with the locking pucks; and
   an attachment fastener connectable to the housing and configured to be connected to an overhead structure.
Clause 19. The threaded rod hanger of Clause 18, wherein the locking pucks each include inner threads configured to engage outer threads of the threaded rod.
Clause 20. The threaded rod hanger of Clause 18, wherein a portion of the housing is configured to securely hold the attachment fastener.

## Claims

1. A threaded rod hanger comprising:
a set screw including a threaded shaft and a head fixedly connected to the threaded shaft;
a connector including a threaded rod receiver, a first arm connected to and extending from the threaded rod receiver, and a second arm connected to and extending from the threaded rod receiver, the second arm including inner threads and defining an inner opening configured to threadedly receive the threaded shaft of the set screw; and
a jam nut threadedly mounted on the shaft of the set screw at a position adjacent to and in substantial frictional engagement with the head of the set screw such that rotation of the jam nut causes rotation of the head and thus the shaft of the set screw, the jam nut is rotatable on the shaft of the set screw after being disengaged from the head of the set screw,
wherein the head of the set screw has an outer width that is smaller than the outer width of the jam nut such that a tool can be positioned over the head of the set screw and onto the jam nut to engage the jam nut and rotate the jam nut.

2. The threaded rod hanger of Claim 1, wherein the head of the set screw is square, or wherein the head of the set screw is cylindrical, or wherein the head of the set screw is hexagonal.

3. The threaded rod hanger of Claim 1, wherein the head of the set screw includes an inner engagement member sized to receive to be engaged by a tool.

4. The threaded rod hanger of Claim 1, wherein the jam nut is sized to be engaged by a 9/16 socket, or wherein the jam nut is sized to be engaged by a 11/16 socket.

5. The threaded rod hanger of Claim 1, wherein the threaded rod received includes an upper inner threaded section and a lower non-inner threaded section.

6. The threaded rod hanger of Claim 1, which includes one or more pucks engageable with the threaded rod and a spring clamp engaging each said puck.

7. The threaded rod hanger of Claim 6, wherein the one or more pucks includes a first puck and a separate second puck each engageable with the threaded rod, and a spring clamp that engages the first and second pucks.

8. The threaded rod hanger of Claim 7, wherein the first and second pucks extend in a same directional position, or wherein the first and second pucks extend in opposite directional positions.

9. A threaded rod hanger comprising:
a connector including a connector body, a fastener, and a fastener securer; and
a threaded rod receiver including a receiver body and an expandable nut assembly including a spring clip radially positioned around pucks of the nut assembly and configured to bias the pucks radially inwardly.

10. The threaded rod hanger of Claim 9, wherein the receiver body is configured to receive the expandable nut assembly.

11. The threaded rod hanger of Claim 9, which includes a locking cap, wherein the receiver body is configured to receive the expandable nut assembly, and wherein the locking cap is configured to hold the expandable nut assembly in the receiver body, and optionally wherein the expandable nut assembly includes two separate pucks each engageable with the threaded rod, and a spring clamp that engages the pucks.

12. The threaded rod hanger of Claim 9, wherein the expandable nut assembly includes a first puck and a separate second puck that are each engageable with the threaded rod, and a spring clamp that engages the first and second pucks.

13. A threaded rod hanger comprising:
a housing that defines puck receiving openings;
separate and independent locking pucks respectively positioned in the puck receiving openings, the locking pucks configured to engage a threaded rod;
a spring clip positioned around the housing and in engagement with the locking pucks; and
an attachment fastener connectable to the housing and configured to be connected to an overhead structure.

14. The threaded rod hanger of Claim 13, wherein the locking pucks each include inner threads configured to engage outer threads of the threaded rod.

15. The threaded rod hanger of Claim 13, wherein a portion of the housing is configured to securely hold the attachment fastener.
